(19)

Europäisches
Patentamt
European
Patent Office
Office européen
des brevets

(11) **EP 4 524 822 A1**

(12) **EUROPEAN PATENT APPLICATION**

(43) Date of publication:
**19.03.2025 Bulletin 2025/12**

(21) Application number: **24186666.4**

(22) Date of filing: **04.07.2024**

(51) International Patent Classification (IPC):
**G06N 5/01** (2023.01)

(52) Cooperative Patent Classification (CPC):
**G06N 5/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023 JP 2023149253**

(71) Applicant: **Kabushiki Kaisha Toshiba
Tokyo 105-0023 (JP)**

(72) Inventors:
• **HAMAKAWA, Yohei
Tokyo, 105-0023 (JP)**
• **TATSUMURA, Kosuke
Tokyo, 105-0023 (JP)**

(74) Representative: **Marks & Clerk LLP
15 Fetter Lane
London EC4A 1BW (GB)**

(54) **INFORMATION PROCESSING SYSTEM, INFORMATION PROCESSING DEVICE,
INFORMATION PROCESSING METHOD, PROGRAM, AND CIRCUIT INFORMATION**

(57)    An information processing system (10) according to an embodiment includes an information processing device (20) and a solver device (30). The information processing device (20) generates a plurality of coefficients based on a combinatorial optimization problem, encodes a first coefficient represented by a predetermined first data type into a first identification value represented by a second data type having a smaller data size than the first data type, outputs, to the solver device (30), coefficient information including the first identification value instead of the first coefficient, acquires ground state information from the solver device (30), and outputs a solution of the combinatorial optimization problem based on the ground state information. In the solving process, the solver device (30) executes an operation on the first coefficient by using a first restoration value corresponding to the first identification value represented by the restoration information. The first restoration value is expressed by the first data type.

FIG.6

**Description**

FIELD

The present disclosure relates an information processing system, an information processing device, an information processing method, a program, and circuit information.

BACKGROUND

Optimization of systems in various fields of application, such as control, finance, communication, logistics, and chemistry, is often mathematically reduced to combinatorial optimization problems. An information processing system that realizes various information processing functions such as recognition, determination, and planning by solving a combinatorial optimization problem and improves efficiency of such functions has been proposed.

The combinatorial optimization problem is to define a cost function using a plurality of decision variables (for example, discrete variables) representing a state of a system to be optimized as arguments and solve a combination of values of a plurality of decision variables that minimizes the defined cost function. The state of the system expressed by the plurality of decision variables is referred to as a solution. In the combinatorial optimization problem, as the number of decision variables increases, the number of states that can be taken as a solution increases exponentially. An increase in the number of states that can be taken as a solution is referred to as a combinatorial explosion. The combinatorial optimization of selecting one optimum solution from all solution candidates is known as a problem that is difficult to calculate. Performing large-scale combinatorial optimization in a short time is still a challenge.

In recent years, a specific purpose device called an Ising machine that searches a ground state of an Ising model has attracted attention. A problem of searching the ground state of the Ising model is called an Ising problem. The Ising problem is a combinatorial optimization problem that minimizes a cost function given by a quadratic function of an Ising spin that is one of binary variables. In the Ising problem, the cost function is referred to as Ising energy. Many practical combinatorial optimization problems can be converted into Ising problems. The Ising machine can solve the Ising problem at high speed. Therefore, many practical combinatorial optimization problems can be solved at high speed using an Ising machine.

An information processing system having a function of solving a combinatorial optimization problem using an Ising machine includes an Ising machine that performs a search process of a ground state of an Ising model, and a host unit that performs processing other than the search processing. The Ising model is defined by a coupling coefficient group (J matrix) and an external magnetic field coefficient group (h vector). The host unit transmits the Ising model data including the J matrix and the h vector to the Ising machine, and receives respective values of the plurality of optimized Ising spins from the Ising machine. In addition, the Ising machine receives the Ising model data from the host unit and returns respective values of the plurality of Ising spins optimized to minimize the Ising energy. In this manner, the information processing system transmits the Ising model data from the host unit to the Ising machine prior to the ground state search processing.

The Ising model is highly versatile by being expressed by a data type with high accuracy and a wide value range. However, an Ising model represented by a data type with high accuracy and a wide value range has a large data amount. For this reason, in a case where the Ising model expressed by the high-accuracy and wide value range data type is used, the information processing system has a long transfer time of the Ising model data from the host unit to the Ising machine. On the other hand, the information processing system can shorten the transfer time of the Ising model data from the host unit to the Ising machine in a case where the Ising model represented by the data type with low accuracy and a narrow value range is used. However, the versatility of the Ising model expressed by a data type with low accuracy and a narrow value range is deteriorated. As described above, there is a trade-off relationship between the versatility of the Ising model and the data transfer time from the host unit to the Ising machine according to the accuracy and the width of the value range of the data type representing the Ising model. Therefore, it is preferable that the information processing system having a function of solving the optimization problem using the Ising model can shorten the data transfer time from the host unit to the Ising machine, and can increase the accuracy and widen the value range of the data type expressing the Ising model.

In addition, the information processing system having a function of solving the optimization problem is not limited to the Ising machine, and can also solve the optimization problem using a quadratic unconstrained binary optimization (QUBO) solver, a higher order binary optimization (HUBO) solver, or the like. Also in the information processing system having a function of solving an optimization problem using such a solver, there is a trade-off relationship between the versatility of the plurality of coefficients included in the cost function and the data transfer time from the host unit to the Ising machine according to the accuracy and the width of the value range of the data type representing the plurality of coefficients included in the cost function. Therefore, it is preferable that the information processing system having the function of solving the optimization problem can also shorten the data transfer time from the host unit to the Ising machine, and increase the accuracy and the width the value range of the data type expressing the plurality of coefficients included in the cost function.

BRIEF DESCRIPTION OF THE DRAWINGS

Fig. 1 is a diagram illustrating a model of an Ising problem;
Fig. 2 is a diagram illustrating internal variables used by a simulated bifurcation algorithm;
Fig. 3 is a flowchart illustrating a flow of a process of a simulated bifurcation machine;
Fig. 4 is a configuration diagram of an information processing system according to the first embodiment;
Fig. 5 is a diagram illustrating a configuration of an information processing system including a simulated bifurcation machine;
Fig. 6 is a diagram illustrating a configuration of a host device and a configuration of a solver device;
Fig. 7 is a diagram illustrating an example of types of possible values of a plurality of coefficients;
Fig. 8 is a diagram for describing a first encoding method;
Fig. 9 is a diagram illustrating a restoration method corresponding to the first encoding method;
Fig. 10 is a diagram illustrating a first example of a range of possible values of a plurality of coefficients;
Fig. 11 is a diagram for describing a second encoding method;
Fig. 12 is a diagram illustrating a restoration method corresponding to the second encoding method;
Fig. 13 is a diagram illustrating a second example of a range of possible values of a plurality of coefficients;
Fig. 14 is a diagram for describing a third encoding method;
Fig. 15 is a diagram for describing a fourth encoding method;
Fig. 16 is a diagram illustrating a restoration method corresponding to the fourth encoding method;
Fig. 17 is a diagram illustrating an example of a configuration of a solving circuit according to the second embodiment;
Fig. 18 is a diagram illustrating a configuration of a product-sum operation circuit;
Fig. 19 is a configuration diagram of a market system;
Fig. 20 is a diagram illustrating an example of a configuration of a control system; and
Fig. 21 is a hardware configuration diagram of a computer.

DETAILED DESCRIPTION

According to an embodiment, an information processing system for solving a combinatorial optimization problem, the information processing system includes an information processing device, and a solver device. The information processing device outputs coefficient information representing a plurality of coefficients in a cost function including the plurality of coefficients and N decision variables, where N is an integer of two or more. The solver device calculates ground state information representing values of the N decision variables by executing a solving process for minimizing the cost function, based on the coefficient information. The information processing device: generates the plurality of coefficients based on the combinatorial optimization problem; encodes a first coefficient represented by a predetermined first data type among the plurality of coefficients into a first identification value represented by a second data type having a data size smaller than a data size of the first data type; outputs, to the solver device, the coefficient information including the first identification value instead of the first coefficient; acquires the ground state information from the solver device; and outputs a solution of the combinatorial optimization problem based on the ground state information. In the solving process, the solver device executes an operation on the first coefficient by using a first restoration value corresponding to the first identification value represented by restoration information. The first restoration value is expressed by the first data type.

Premise

First, terms and techniques that are the premise of the description of the embodiments will be described.
The combinatorial optimization problem is to define a cost function using a plurality of decision variables (for example, discrete variables) representing a state of a system to be optimized as arguments and solve a combination of values of a plurality of decision variables that minimizes the defined cost function. The cost function includes a plurality of decision variables representing the state of the system as arguments, and is a linear or higher function of the decision variables. For example, the cost function is represented by a linear function or a quadratic function of a plurality of decision variables. The cost function may be a cubic or higher function of the plurality of decision variables. In other words, the cost function is a function of summing a plurality of terms. Each of the terms is a function that multiplies one or more and a predetermined number or less of the plurality of decision variables by a coefficient. The coefficient in each of the plurality of terms is a real number and is also referred to as a weight value. That is, each of the plurality of terms constituting the cost function is represented by multiplication of one or more decision variables among the plurality of decision variables and any one weight value among the plurality of weight values.

The state of the system expressed by the plurality of decision variables is referred to as a solution. A whole set of a plurality of solutions that is allowed to be taken by a state of a system is referred to as a solution space. A solution that gives the minimum value of the cost function is referred to as an exact solution. A solution that gives a value close to the minimum value of the cost function is referred to as a good solution.

The exact solution is to obtain an exact solution that gives a minimum value of a cost function of a combinatorial optimization problem, and to ensure that the solution is an exact solution.

The heuristic solution is to find an exact solution that gives the minimum value of the cost function or a good solution that gives a value close to the minimum value of the cost function of a combinatorial optimization problem. A heuristic solution is also referred to as a heuristic solution. The heuristic solution has no guarantee of an index representing the accuracy of the solution, that is, how close the heuristic solution gives a value to the minimum value of the cost function. The heuristic solution method can output a solution with practically significant accuracy in a shorter solving time than the exact solution method.

The calculation amount of the solution to the combinatorial optimization problem is the amount of operation required to obtain a solution, for example, the number of times of product-sum operation or the like. The solving time required to obtain a solution to the combinatorial optimization problem depends not only on the amount of calculation but also on the configuration of the computer machine that processes the calculation. For example, the higher the computational parallelism and the operating frequency of the computer machine, the shorter the solving time.

The QUBO problem is an unconstrained quadratic optimization problem in which the decision variable is binary. In the QUBO problem, each of terms included in the cost function is represented by a quadratic expression or a linear expression of the decision variable. The QUBO problem in a narrow definition is a binary variable with a decision variable of zero or one. In the embodiment, the QUBO problem represents a problem of definition in a narrow sense in which the decision variable is zero or one. In the narrow-sense definition QUBO problem, the decision variable may also be referred to as a bit variable.

The cost function of the QUBO problem is expressed by $H_{total\_QUBO}$ of Expression (1) .

$$H_{total\_QUBO} = \sum_{i=1}^{N}\sum_{j=1}^{N} Q_{ij}b_ib_j = 2\sum_{i=1}^{N}\sum_{i<j}^{N} Q_{ij}b_ib_j + \sum_{i=1}^{N} Q_{ii}b_i \qquad \cdots (1)$$

N is an integer of two or more and represents the number of decision variables. i and j represent an any integer of one or more and N or less. $b_i$ is zero or one, and represents the i-th decision variable among the N decision variables. $b_j$ is zero or one, and represents the j-th decision variable among the N decision variables. $Q_{ij}$ represents coefficients of the i-th row and the j-th column included in the coefficient matrix (Q) of N×N. Note that $Q_{ij} = Q_{ji}$. $Q_{ii}$ is a coefficient included in the i-th row and the i-th column of the coefficient matrix (Q), and is a coefficient multiplied by the first-order term of the i-th decision variable. $Q_{ii}$ is referred to as a bias coefficient.

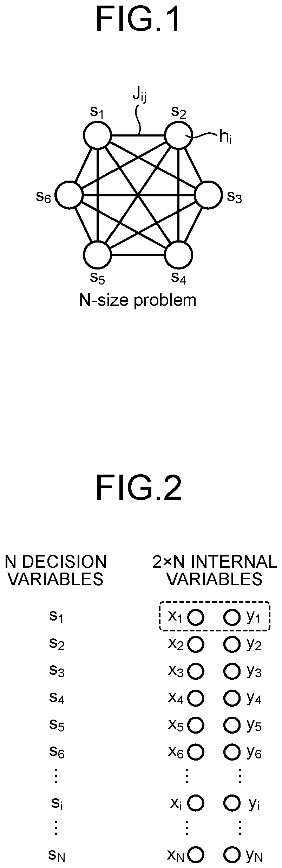

Fig. 1 is a diagram illustrating a model of an Ising problem. The Ising problem is a problem of searching a ground state of an Ising model. The Ising problem is one of the QUBO problems. The decision variable of the Ising problem represents a discrete variable of -1 or +1.

The cost function of the Ising problem is expressed by $H_{total\_Ising}$ of Expression (2) .

$$H_{total\_Ising} = -\frac{1}{2}\sum_{i=1}^{N}\sum_{j=1}^{N} J_{ij}\,s_is_j + \sum_{i=1}^{N} h_is_i \qquad \cdots (2)$$

N is an integer of two or more and represents the number of decision variables. i and j represent an any integer of one or more and N or less. $s_i$ is -1 or +1, and represents the i-th decision variable among the N decision variables. $s_j$ is -1 or +1, and represents the j-th decision variable among the N decision variables. $J_{ij}$ represents coefficients of the i-th row and the j-th column included in the coefficient matrix (J) of N×N. Note that $J_{ij} = J_{ji}$. $h_i$ is a coefficient multiplied by a first-order term of the i-th decision variable. $h_i$ is referred to as a bias coefficient.

The Ising problem in which the decision variable is $s_i$ corresponds to the problem of the ground state search of the Ising model, which is one of the magnetic body models in the statistical mechanics. Therefore, $s_i$ may also be referred to as a spin variable. Furthermore, N, which is the number of decision variables, may also be referred to as the number of spins. In addition, $H_{total\_Ising}$ may also be referred to as Ising energy. The vector represented by the N $s_i$s having the minimum

value of $H_{total\_Ising}$ may be referred to as a ground state (ground spin arrangement).

The cost function of the QUBO problem and the cost function of the Ising problem differ only in the value of the constant. Therefore, the QUBO problem and the Ising problem are the same as a combinatorial optimization problem. That is, the QUBO problem and the Ising problem can be mutually converted. For example, the Ising problem and the QUBO problem are mutually converted by Expressions (3-1), (3-2), (3-3), and (3-4).

$$s_i = 2b_i - 1 \qquad \cdots (3\text{-}1)$$

$$J_{ij} = -\frac{Q_{ij}}{2} \ (i \neq j) \qquad \cdots (3\text{-}2)$$

$$J_{ii} = 0 \qquad \cdots (3\text{-}3)$$

$$h_i = \sum_{j=1}^{N} \frac{Q_{ij}}{2} \qquad \cdots (3\text{-}4)$$

The QUBO and Ising problems are known to be NP-complete. That is, many NP-hard problems can be converted into a QUBO problem or an Ising problem in polynomial time. Therefore, many practical combinatorial optimization problems can be converted into the QUBO problem or the Ising problem.

The Ising machine is a device that solves an Ising problem. Many Ising machines solve Ising problems with heuristic solutions. Ising machines of various principles based on electronics, optics, quantum mechanics, statistical mechanics, and the like have been proposed. Many Ising machines can output an exact solution or a good solution in a short time.

The simulated bifurcation algorithm is an algorithm for solving a combinatorial optimization problem. The simulated bifurcation algorithm is a heuristic solution algorithm.

For example, Hayato Goto, Kosuke Tatsumura and Alexander R. Dixon, "Combinatorial optimization by simulating adiabatic bifurcations in nonlinear Hamiltonian systems," Science Advances 5, eaav2372, 2019 and Hayato Goto, Kotaro Endo, Masaru Suzuki, Yoshisato Sakai, Taro Kanao, Yohei Hamakawa, Ryo Hidaka, Masaya Yamasaki and Kosuke Tatsumura, "High-performance combinatorial optimization based on classical mechanics", Science Advances 7, eabe7953, 2021 and JP 2021-060864 A, JP 2019-145010 A, JP 2019-159566 A, JP 2021-043667 A, and JP 2021-043589A disclose the simulated bifurcation algorithm. The simulated bifurcation algorithm is also referred to as a quantum inspired algorithm because it has been discovered with an idea from a quantum mechanical optimization method based on the quantum adiabatic theorem. The simulated bifurcation algorithm can solve a combinatorial optimization problem in which the cost function is a quadratic function of a plurality of decision variables. The simulated bifurcation algorithm can also solve a combinatorial optimization problem in which the cost function is a cubic or higher function of a plurality of decision variables, that is, a higher order binary optimization (HUBO) problem. For example, a simulated bifurcation algorithm that solves the HUBO problem is disclosed in JP 2021-043667 A. Moreover, the simulated bifurcation algorithm can also solve a combinatorial optimization problem including variables of continuous values in some or all of a plurality of decision variables. A simulated bifurcation algorithm that solves a combinatorial optimization problem including variables of continuous values in some or all of a plurality of decision variables is disclosed in JP 2021-043589A.

The simulated bifurcation machine is a calculation apparatus that executes a process according to the simulated bifurcation algorithm. A simulated bifurcation machine that solves a QUBO problem or an Ising problem is an example of an Ising machine. In the present arrangement, the simulated bifurcation machine solves the Ising problem.

Fig. 2 is a diagram illustrating internal variables used by the simulated bifurcation algorithm.

When solving a combinatorial optimization problem in which a cost function is represented using N decision variables ($s_1$ to $s_N$), the simulated bifurcation algorithm uses N position variables ($x_1$ to $x_N$) and N momentum variables ($y_1$ to $y_N$) as internal variables. That is, the simulated bifurcation algorithm uses $2 \times N$ internal variables.

N position variables ($x_i$) correspond to N decision variables ($s_i$) on a one-to-one basis. That is, the i-th position variable ($x_i$) among the N position variables corresponds to the i-th decision variable ($s_i$) among the N decision variables. N momentum variables ($y_i$) correspond to N decision variables ($s_i$) on a one-to-one basis. That is, the i-th momentum variable ($y_i$) among the N momentum variables corresponds to the i-th decision variable ($s_i$) among the N decision variables.

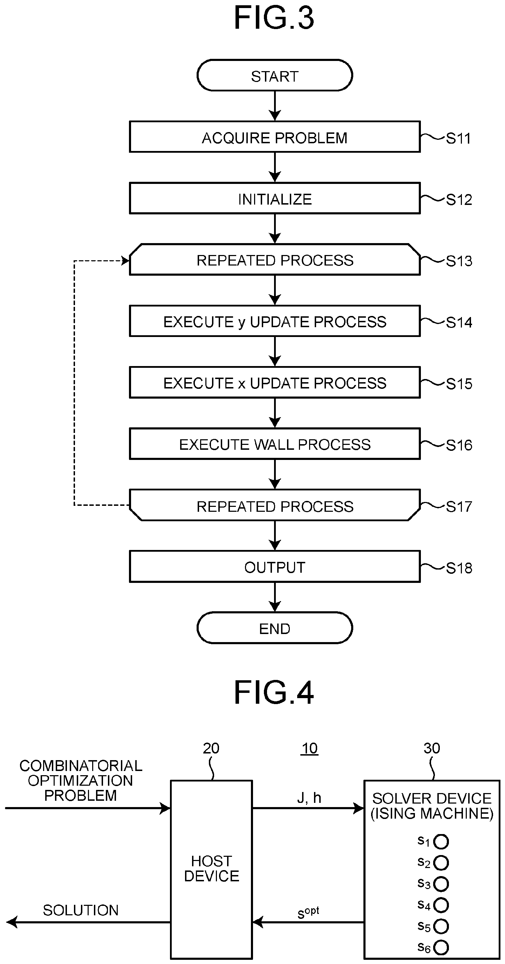

Fig. 3 is a flowchart illustrating a flow of a process of the simulated bifurcation machine. The simulated bifurcation machine executes a process according to the simulated bifurcation algorithm in the flow illustrated in Fig. 3.

First, in S11, the simulated bifurcation machine acquires the Ising problem. Specifically, the simulated bifurcation machine acquires J, which is a matrix including N×N coefficients, and h including N bias coefficients.

Subsequently, in S12, the simulated bifurcation machine initializes 2×N internal variables, that is, N position variables ($x_1$ to $x_N$) and N momentum variables ($y_1$ to $y_N$). The simulated bifurcation machine may acquire both or one of the initial values of the N position variables ($x_1$ to $x_N$) and the initial values of the N momentum variables ($y_1$ to $y_N$) from the outside. Furthermore, the simulated bifurcation machine may generate the initial values of the N position variables ($x_1$ to $x_N$) and the initial values of the N momentum variables ($y_1$ to $y_N$) by a random number generated by a random number generation circuit, or may set the initial values to predetermined values. Note that, since the simulated bifurcation machine is heuristic, even in the same problem, when at least one of the initial values of the N position variables ($x_1$ to $x_N$) and the initial values of the N momentum variables ($y_1$ to $y_N$) is different, a different good solution may be output.

Subsequently, the simulated bifurcation machine repeats the process of S14 to S16 a preset number of times (loop processing between S13 and S17). The process of S14 to S16 is a matrix arithmetic process of matrix-multiplying N position variables ($x_1$ to $x_N$) by a matrix including weight values of N rows × N columns, and a time evolution process of time-evolving the N position variables ($x_1$ to $x_N$) and the N momentum variables ($y_1$ to $y_N$) .

In S14, the simulated bifurcation machine executes a y update process of updating each of the N momentum variables ($y_1$ to $y_N$). In the update process of the i-th momentum variable ($y_i$) in the y update processing, the simulated bifurcation machine updates the i-th momentum variable ($y_i$) by the N position variables ($x_1$ to $x_N$), the N coefficients ($J_{i,j}$) representing the interaction between the i-th position variable ($x_i$) in the N×N matrices (J) and the other (N-1) position variables ($x_{1 \text{ to } i-1}$, $x_{i+1 \text{ to } N}$), and the i-th bias coefficient ($h_i$).

Subsequently, in S15, the simulated bifurcation machine executes an x update process of updating each of the N position variables ($x_1$ to $x_N$). The simulated bifurcation machine updates the i-th position variable ($x_i$) by the i-th momentum variable ($y_i$) in the update process of the i-th position variable ($x_i$) in the x update processing.

Note that the simulated bifurcation machine may execute the process of S14 and the process of S15 in an order changed.

Subsequently, in S16, the simulated bifurcation machine executes a wall process on the position variable whose absolute value exceeds one among the N position variables ($x_1$ to $x_N$). Furthermore, the simulated bifurcation machine also executes a wall process on the momentum variable corresponding to the position variable whose absolute value exceeds one. For example, in the wall process, the simulated bifurcation machine changes a value of the position variable whose absolute value exceeds one to a value whose absolute value is one or smaller than one in a state where the signs are the same. Moreover, for example, the simulated bifurcation machine changes a value of the momentum variable corresponding to the position variable whose absolute value exceeds one to zero in the wall processing.

The simulated bifurcation algorithm has variations in operations of the x update processing, the y update processing, and the wall processing. For example, variations of the simulated bifurcation algorithm include an adiabatic simulated bifurcation (aSB) algorithm, a ballistic simulated bifurcation (bSB) algorithm, and a discrete simulated bifurcation (dSB) algorithm.

In a case where the processing according to the adiabatic simulated bifurcation algorithm is executed, the simulated bifurcation machine executes an operation represented by Expression (4-1) in the y update processing (S14) and executes an operation represented by Expression (4-2) in the x update processing (S15). Note that, in a case where the processing according to the adiabatic simulated bifurcation algorithm is executed, the simulated bifurcation machine does not execute the wall process (S15) .

$$y_i(t_{k+1}) = y_i(t_k)$$

$$+ \left\{ -Kx_i^3(t_k) - [a_0 - a(t_k)]x_i(t_k) - \eta h_i \right.$$

$$\left. + c_0 \sum_{j=1}^{N} J_{i,j}\, x_j(t_k) \right\} \Delta_t \qquad \cdots (4\text{-}1)$$

$$x_i(t_{k+1}) = x_i(t_k) + a_0 y_i(t_{k+1})\Delta_t \qquad \cdots (4\text{-}2)$$

In a case where the processing according to the ballistic simulated bifurcation algorithm is executed, the simulated bifurcation machine executes an operation represented by Expression (5-1) in the y update processing (S14), executes an operation represented by Expression (5-2) in the x update processing (S15), and executes an operation represented by Expression (5-3) in the wall processing (S16).

$$y_i(t_{k+1}) = y_i(t_k)$$

$$+ \left\{ -[a_0 - a(t_k)]x_i(t_k) - \eta h_i + c_0 \sum_{j=1}^{N} J_{i,j}\, x_j(t_k) \right\} \Delta_t \qquad \cdots (5\text{-}1)$$

$$x_i(t_{k+1}) = x_i(t_k) + a_0 y_i(t_{k+1})\Delta_t \qquad \cdots (5\text{-}2)$$

$$\text{if } |x_i(t_{k+1})| > 1,\ \text{set } x_i(t_{k+1}) = \text{sgn}\big(x_i(t_{k+1})\big) \text{ and } y_i(t_{k+1}) = 0 \quad \cdots (5\text{-}3)$$

In a case where the processing according to the discrete simulated bifurcation algorithm is executed, the simulated bifurcation machine executes an operation represented by Expression (6-1) in the y update processing (S14), executes an operation represented by Expression (6-2) in the x update processing (S15), and executes an operation represented by Expression (6-3) in the wall processing (S16).

$$y_i(t_{k+1}) = y_i(t_k)$$

$$+ \left\{ -[a_0 - a(t_k)]x_i(t_k) - \eta h_i \right.$$

$$\left. + c_0 \sum_{j=1}^{N} J_{i,j}\,\text{sgn}[x_i(t_k)] \right\} \Delta_t \qquad \cdots (6\text{-}1)$$

$$x_i(t_{k+1}) = x_i(t_k) + a_0 y_i(t_{k+1})\Delta_t \qquad \cdots (6\text{-}2)$$

$$\text{if } |x_i(t_{k+1})| > 1,\ \text{set } x_i(t_{k+1}) = \text{sgn}\big(x_i(t_{k+1})\big) \text{ and } y_i(t_{k+1}) = 0 \quad \cdots (6\text{-}3)$$

In Expressions (4-1), (4-2), (5-1), (5-2), (5-3), (6-1), (6-2), and (6-3), each of $t_k$ and $t_{k+1}$ represent a time. $t_{k+1}$ is a time obtained by adding a unit time ($\Delta t$) to $t_k$.

$x_i(t_k)$ indicates a value of the i-th position variable ($x_i$) at the time ($t_k$). $x_i(t_{k+1})$ indicates a value of the i-th position variable ($x_i$) at the time ($t_{k+1}$). $y_i(t_k)$ indicates a value of the i-th momentum variable ($y_i$) at the time ($t_k$). $y_i(t_{k+1})$ indicates a value of the i-th momentum variable ($y_i$) at the time ($t_{k+1}$).

K, $a_0$, $\eta$, and $c_0$ are predetermined constants. $a(t_k)$ is a function that changes according to a time. $a(t_k)$, where, for example, $a(t_1) = 0$, is a positive real number that increases as the time increases, and is a function that is $a_0$ at the end time (T) ($a(T) = a_0$). Moreover, $\text{sgn}(x_1(t_k))$ is a function that outputs the sign of the i-th position variable ($x_i$) at the time ($t_k$), and is +1 when $x_i(t_k)$ is zero or more and -1 when $x_i(t_k)$ is less than zero.

In a case where the process of S14 to S16 are executed a predetermined number of times, that is, in a case where the operation is executed until time t reaches final time T, the simulated bifurcation machine exits the loop processing between S13 and S17 and advances the process to S18.

In S18, the simulated bifurcation machine outputs N position variables ($x_1$ to $x_N$) at the final time or N decision variables ($s_1$ to $s_N$) calculated based on the N position variables ($x_1$ to $x_N$) at the final time. The simulated bifurcation machine calculates the i-th decision variable ($s_i$) among the N decision variables ($s_1$ to $s_N$) based on $\text{sgn}(x_i)$.

When the process of S18 ends, the simulated bifurcation machine ends the process according to the simulated bifurcation algorithm.

Note that the number of repetitions of the time evolution processing (loop processing between S13 and S17) is determined in advance in accordance with the application. The calculation amount necessary for one process (one process of S14 to S16) in the time evolution process does not change. Therefore, the simulated bifurcation machine can reduce the fluctuation in the solving time. Therefore, even when the simulated bifurcation machine is applied to a real-time system having a time constraint that the processing is required to be completed by a predetermined time, the solution can be reliably output by the predetermined time.

Furthermore, for example, as disclosed in JP 2021-060864 A, the simulated bifurcation machine can be configured using a dedicated parallel processing circuit including a large number of arithmetic units. As a result, the simulated bifurcation machine can extremely shorten the calculation time of one process in the time evolution process. In addition, unlike the case of software processing, in a simulated bifurcation machine mounted on a dedicated hardware circuit, any interrupt processing does not occur, so that the solving time is strictly fixed. For example, a simulated bifurcation machine mounted on a dedicated hardware circuit can fix the time until a solution is obtained in units of clock cycles. Therefore, in a case where the simulated bifurcation machine mounted on a dedicated hardware circuit is applied to a real-time system, it is possible to output a solution while more reliably protecting a time constraint.

First Arrangement

Next, an information processing system 10 according to the first arrangement will be described.

Fig. 4 is a diagram illustrating a configuration of the information processing system 10 according to the first arrangement. The information processing system 10 receives the combinatorial optimization problem and solves the combinatorial optimization problem using a host device 20 and a solver device 30. Then, the information processing system 10 outputs a solution of the combinatorial optimization problem.

The information processing system 10 includes a host device 20 and a solver device 30.

The solver device 30 is an Ising machine realized by hardware. The solver device 30 is introduced for the purpose of shortening the solving time of the combinatorial optimization problem and operates as an accelerator or an off-loader in the information processing system 10.

Further, the host device 20 is an information processing device, and includes a general-purpose processor, and an accelerator, an off-loader, a memory, a storage, a sensor, an actuator, a communication interface, and the like other than the solver device 30. The host device 20 executes a process other than the processing executed by the solver device 30.

Note that the host device 20 and the solver device 30 may be connected via a network. For example, the host device 20 may be a client terminal device on a network, and the solver device 30 may be realized by a server, a cloud, or the like on the network. Furthermore, the host device 20 and the solver device 30 may be connected via a communication bus. For example, the host device 20 may be a computer, and the solver device 30 may be realized by an external device of the computer, a separate computer, or the like.

The host device 20 acquires a combinatorial optimization problem. The host device 20 formulates a cost function including a plurality of coefficients and N decision variables, where N is an integer of two or more, based on the acquired combinatorial optimization problem. In the present arrangement, the host device 20 formulates a cost function of the Ising problem based on the acquired combinatorial optimization problem. Then, the host device 20 outputs at least coefficient information (matrix (J) and bias coefficient array (h)) for identifying the Ising problem to the solver device 30.

The solver device 30 acquires coefficient information from the host device 20. When acquiring the coefficient information, the solver device 30 executes a solving process for minimizing the cost function formulated by the host device 20 based on the coefficient information. Then, after the completion of the solving process, the solver device 30 outputs, to the host device 20, the ground state information ($s^{opt}$) representing the value of each of the N decision variables ($s_1$ to $s_N$) in the ground state of the cost function.

Note that the solver device 30 may be a QUBO solver that solves the QUBO problem. In this case, the host device 20 generates coefficient information (matrix (Q)) for identifying the QUBO problem as the coefficient information to output the coefficient information to the solver device 30. In this case, the solver device 30 outputs the ground state information ($b^{opt}$)) representing the value of each of the N decision variables ($b_1$ to $b_N$) to the host device 20.

In addition, the solver device 30 may acquire coefficient information (matrix (Q)) identifying the QUBO problem, reduce the QUBO problem to the Ising problem, and execute the solving process. Furthermore, the solver device 30 may be an HUBO solver that solves the HUBO problem, or may be a device capable of executing a solving process that minimizes a cost function including a variable representing a continuous value in some decision variables among the N decision variables. In this case, the host device 20 formulates a cost function in a form that can be solved by the solver device 30 to output coefficient information representing a plurality of coefficients included in the formulated cost function to the solver device 30.

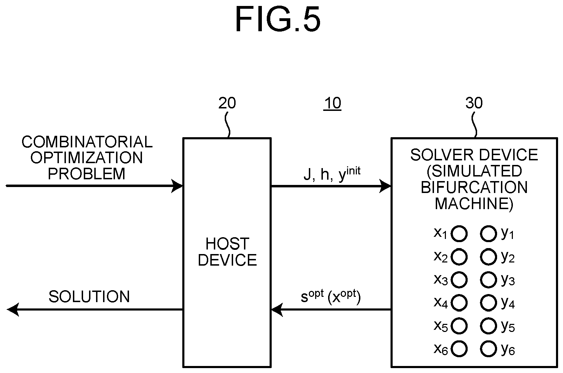

Fig. 5 is a diagram illustrating a configuration of an information processing system 10 including a solver device 30 which is a simulated bifurcation machine.

The solver device 30 may be a simulated bifurcation machine. In this case, the host device 20 provides the simulated bifurcation machine with information (matrix (J) and bias coefficient (h)) for identifying the Ising problem. Further, the host device 20 may provide the solver device 30 with initial values of the N position variables ($x_1$ to $x_N$) and initial values of the N momentum variables ($y_1$ to $y_N$). In addition, the host device 20 may provide the solver device 30 with various constants, functions (for example, K, $a_0$, $c_0$, a(t) and $\Delta t$), and the like used in the simulated bifurcation algorithm. After the optimization processing, the solver device 30 may return, as a solution, the ground state information ($x^{opt}$) representing N position variables ($x_1$ to $x_N$) to the host device 20, instead of the ground state information ($s^{opt}$) representing N decision variables ($s_1$ to $s_N$). Furthermore, even in the simulated bifurcation machine, the solver device 30 may acquire coefficient information (matrix (Q)) for identifying the QUBO problem, reduce the QUBO problem to the Ising problem, and execute the solving process.

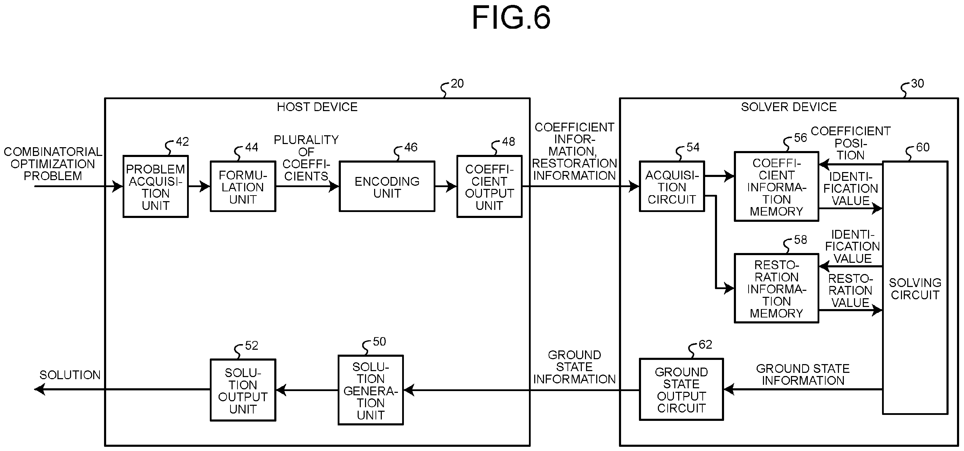

Fig. 6 is a diagram illustrating a configuration of the host device 20 and a configuration of the solver device 30.

The host device 20 includes a problem acquisition unit 42, a formulation unit 44, an encoding unit 46, a coefficient output unit 48, a solution generation unit 50, and a solution output unit 52.

The problem acquisition unit 42 acquires a combinatorial optimization problem from an external device. As an example, the problem acquisition unit 42 acquires a problem such as a bipartite graph maximum matching problem or a maximum independent set problem. The problem acquisition unit 42 may acquire an Ising problem or a QUBO problem as the combinatorial optimization problem. In addition, the problem acquisition unit 42 may acquire a problem including a constraint condition.

The formulation unit 44 formulates the acquired combinatorial optimization problem into a cost function in a form that can be solved by the solver device 30.

The cost function is a function of summing a plurality of terms. Each of the terms is a function that multiplies one or more and a predetermined number or less of N decision variables by a coefficient. The formulation unit 44 generates a plurality of coefficients included in such a cost function based on the acquired combinatorial optimization problem. For example, in a case where the solver device 30 is an Ising machine, the formulation unit 44 generates a matrix (J) and a bias coefficient array (h). Furthermore, in a case where the solver device 30 is a QUBO solver, the formulation unit 44 generates a matrix (Q).

Each of the plurality of coefficients is expressed by a predetermined first data type. The first data type is a data type that can be handled by the solver device 30. For example, the first data type is a data type representing a real value such as a 32 bit floating point type or a 64 bit fixed point type.

The encoding unit 46 encodes each of the plurality of coefficients generated by the formulation unit 44 into an identification value represented by the second data type. The second data type has a smaller data size than the first data type. The second data type is, for example, a data type representing a bit string such as 2 bits, 4 bits, or 8 bits, an integer value, or a real value.

That is, the encoding unit 46 converts a plurality of coefficients each expressed by the first data type into a plurality of identification values each expressed by the second data type. The plurality of identification values is equal in number to the plurality of coefficients, and is disposed equally to the plurality of coefficients.

Here, each of the plurality of coefficients belongs to any one of the P groups, where P is an integer of two or more. The group may include a coefficient group having the same value, a coefficient group included in the same value range, or a coefficient group having relatively approximate values.

The encoding unit 46 sets unique identification values expressed by the second data type to each of the P groups. Therefore, the encoding unit 46 sets P identification values corresponding to the P groups on a one-to-one basis. Then, the encoding unit 46 encodes each of the plurality of coefficients into an identification value for identifying the group to which it belongs.

Furthermore, the encoding unit 46 generates restoration information based on the plurality of coefficients and the P identification values. The restoration information is information for causing the solver device 30 to generate a restoration value based on the identification value. The restoration value is a value represented by the first data type and representing a coefficient before being encoded into the identification value. The restoration value may be the same value as the coefficient before being encoded into the identification value, or may be a value different from the coefficient before being encoded into the identification value.

The restoration information indicates the restoration value in association with the identification value for each of the P identification values. In other words, the restoration information indicates the p-th restoration value among the P restoration values in association with the p-th identification value, where p is an integer of one or more and P or less, among the P identification values. In this case, the p-th identification value identifies the p-th group among the P groups. Furthermore, the p-th restoration value represents a coefficient before encoding the p-th identification value.

For example, the restoration information may be a table representing the restoration value corresponding to each of the P identification values. Furthermore, for example, the restoration information may be a function that outputs a restoration value corresponding to the input identification value in a case where any of the P identification values is input. Furthermore, the restoration information may be information obtained by combining a table and a function.

Then, the encoding unit 46 generates coefficient information including a plurality of identification values instead of the plurality of coefficients. For example, the encoding unit 46 generates coefficient information including a first identification value for identifying a group to which the first coefficient among the P identification values belongs, instead of the first coefficient among the plurality of coefficients. For example, in a case where the solver device 30 is an Ising machine, a matrix (J) including identification values instead of coefficients and a bias coefficient array (h) are generated as coefficient information. Furthermore, for example, in a case where the solver device 30 is a QUBO solver, a matrix (Q) including identification values instead of coefficients is generated as coefficient information.

Further details of the encoding method of the identification value by the encoding unit 46 and the restoration information will be described later.

The coefficient output unit 48 outputs the coefficient information and the restoration information generated by the encoding unit 46 to the solver device 30. The solver device 30 executes a solving process in response to receiving the coefficient information and the restoration information. Then, as a result of the solving process, the solver device 30 outputs, to the host device 20, the ground state information representing the respective values of the N decision variables in the ground state.

The solution generation unit 50 acquires the ground state information from the solver device 30. The solution generation unit 50 generates a solution to the combinatorial optimization problem based on the acquired ground state information. The solution output unit 52 outputs a solution of the generated combinatorial optimization problem.

The solver device 30 includes an acquisition circuit 54, a coefficient information memory 56, a restoration information memory 58, a solving circuit 60, and a ground state output circuit 62.

The acquisition circuit 54 acquires the coefficient information and the restoration information from the host device 20. The acquisition circuit 54 writes the acquired coefficient information in the coefficient information memory 56. In addition, the acquisition circuit 54 writes the acquired restoration information in the restoration information memory 58.

The coefficient information memory 56 stores the coefficient information. The restoration information memory 58 stores the restoration information.

The solving circuit 60 performs a solving process for minimizing the cost function based on the coefficient information stored in the coefficient information memory 56 and the restoration information stored in the restoration information memory 58. Then, the solving circuit 60 calculates ground state information representing the respective values of the N decision variables obtained by the solving process.

For example, when performing an operation on a first coefficient among a plurality of coefficients, the solving circuit 60 acquires a first identification value included in the coefficient information instead of the first coefficient. Then, the solving circuit 60 uses the first restoration value corresponding to the first identification value indicated by the restoration information as the first coefficient. Then, the solving circuit 60 executes the arithmetic process based on the acquired first restoration value as the first coefficient.

When executing an operation on each of the plurality of coefficients, the solving circuit 60 obtains a restoration value as in the first coefficient and executes the arithmetic process. Further, the solving circuit 60 may acquire two or more restoration values corresponding to two or more coefficients from the coefficient information in parallel.

The ground state output circuit 62 outputs the ground state information calculated by the solving circuit 60 to the host device 20.

The information processing system 10 as described above can solve the combinatorial optimization problem to output a solution to the combinatorial optimization problem using the host device 20 and the solver device 30.

Note that the encoding unit 46 in the host device 20 may store preset restoration information. In this case, in a case where a plurality of coefficients is generated by the formulation unit 44, the encoding unit 46 does not need to generate the restoration information.

Furthermore, in a case where the encoding unit 46 stores restoration information set in advance, the coefficient output unit 48 in the host device 20 does not need to transmit the restoration information to the solver device 30. In this case, the restoration information memory 58 in the solver device 30 stores the same restoration information as the restoration information set in the host device 20 in advance. That is, the solver device 30 does not acquire the restoration information from the host device 20, and stores the restoration information before the encoding unit 46 generates the coefficient information.

The information processing system 10 as described above transmits coefficient information including a plurality of identification values represented by the second data type having a smaller data size than the first data type from the host device 20 to the solver device 30 even in a case where a plurality of coefficients represented by the first data type with high accuracy and a wide value range is used. Then, the solver device 30 restores each of the plurality of identification values represented by the second data type to the restoration value represented by the first data type using the restoration information and executes the operation.

As a result, the information processing system 10 can reduce the amount of data transfer from the host device 20 to the solver device 30 by eliminating or reducing deterioration of the plurality of coefficients. Therefore, the information processing system 10 can solve the combinatorial optimization problem at high speed with high accuracy.

In addition, the solver device 30 stores a plurality of identification values each expressed by the second data type instead of the plurality of coefficients each expressed by the first data type. Then, in a case where the operation on the first coefficient among the plurality of coefficients is executed, the solver device 30 reads the first identification value included in the coefficient information instead of the first coefficient, restores the first restoration value from the first identification value using the restoration information, and executes the operation. As a result, the solver device 30 can reduce the storage capacity of the coefficient information memory 56.

First Encoding Method

Next, the first encoding method of the coefficient information and the restoration information will be described.

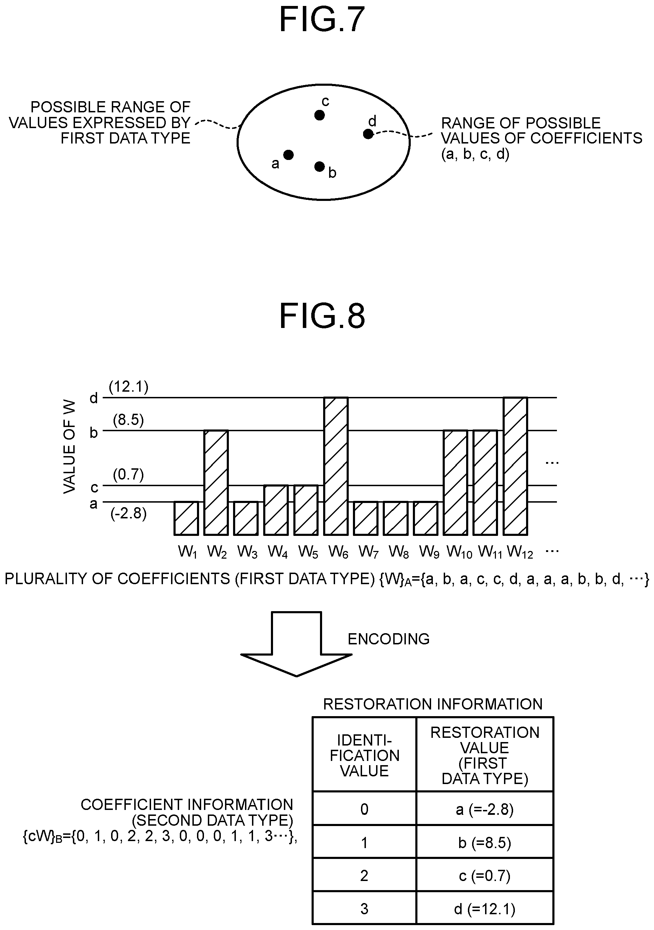

Fig. 7 is a diagram illustrating an example of types of possible values of a plurality of coefficients.

In the cost function, the number of types of possible values of the plurality of coefficients may be very small with respect to the possible range of the values expressed by the first data type. For example, in the example of Fig. 7, in the cost function, each of the plurality of coefficients is, for example, any of a, b, c, and d (a, b, c, and d are real numbers represented by the first data type).

Fig. 8 is a diagram for describing the first encoding method.

For example, it is assumed that the number of types of possible values of the plurality of coefficients included in the cost function is P, where P is an integer of two or more. In this case, each of the plurality of coefficients included in the cost function is any of the P values.

The encoding unit 46 searches all of the plurality of coefficients and detects all of the P values. Note that, depending on the cost function, all the P values may be determined in advance. In such a case, the encoding unit 46 may read preset P values from a memory or the like.

Furthermore, the encoding unit 46 generates P different identification values each expressed by the second data type. Then, the encoding unit 46 allocates the p-th identification value among the P identification values to the p-th value, where p is an integer of one or more and P or less, among the P values. That is, the encoding unit 46 allocates P identification values to the P values on a one-to-one basis.

Furthermore, the encoding unit 46 allocates the p-th restoration value among the P restoration values to the p-th value among the P values. That is, the encoding unit 46 allocates P restoration values to the P values on a one-to-one basis.

Note that the p-th restoration value is the same as the p-th value among the P values. In addition, the p-th restoration value may be a value obtained by quantizing the p-th value with a predetermined value, a value obtained by discarding a predetermined digit or less of the p-th value, a value obtained by rounding up a predetermined digit or less of the p-th value, or a value obtained by rounding up or down a predetermined digit or less of the p-th value with a threshold value.

Furthermore, the encoding unit 46 generates restoration information indicating a correspondence relationship between the P identification values and the P restoration values. For example, the restoration information is a table indicating that the p-th restoration value among the P restoration values corresponds to the p-th identification value among the P identification values.

Then, the encoding unit 46 generates coefficient information in which each of the plurality of coefficients is replaced with an identification value corresponding to a target coefficient among the P identification values. For example, the encoding unit 46 generates coefficient information including a first identification value for identifying the same value as the first coefficient among the P identification values, instead of the first coefficient among the plurality of coefficients.

In the example of Fig. 8, there are four possible values of "a = -2.8", "b = 8.5", "c = 0.7", and "d = 12.1" for each of the plurality of coefficients. In this case, the encoding unit 46 generates four identification values of "0", "1", "2", and "3" expressed by a 2-bit data type. Then, the encoding unit 46 allocates "0" as the identification value to "-2.8", allocates "1" as the identification value to "8.5", allocates "2" as the identification value to "0.7", and allocates "3" as the identification value to "12.1".

In the example of Fig. 8, the encoding unit 46 generates a table as the restoration information. The table represents that the restoration value representing "-2.8" of the first data type corresponds to the identification value representing 0", the restoration value representing "8.5" of the first data type corresponds to the identification value representing "1", the restoration value representing "0.7" of the first data type corresponds to the identification value representing "2", and the restoration value representing "12.1" of the first data type corresponds to the identification value representing "3".

Further, the encoding unit 46 replaces "a = -2.8" with an identification value representing "0" of the second data type, replaces "b = 8.5" with an identification value representing "1" of the second data type, replaces "c = 0.7" with an identification value representing "2" of the second data type, and replaces "d = 12.1" with an identification value representing "3" of the second data type, among the plurality of coefficients ($\{W\}_A$).

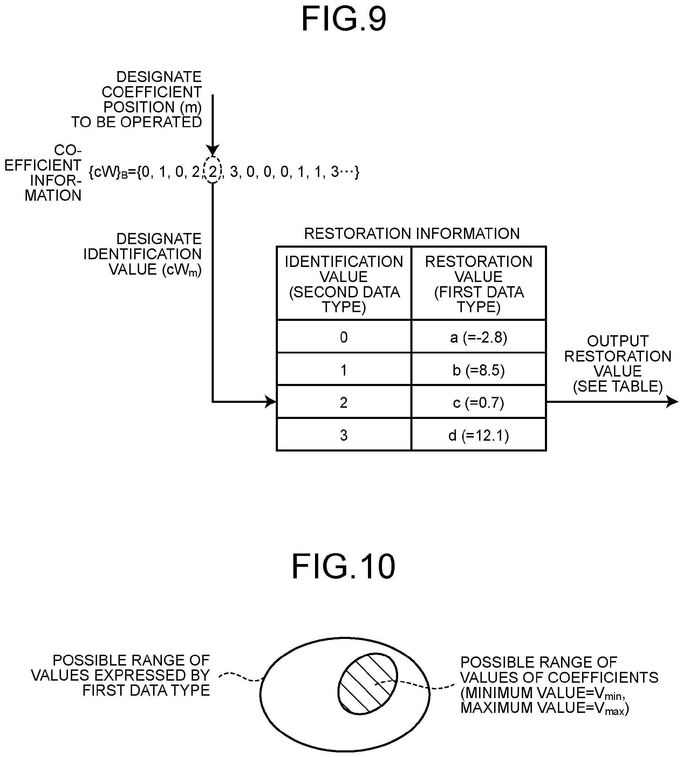

Fig. 9 is a diagram illustrating an example of a method of restoring the restoration value from the coefficient information and the restoration information encoded by the first encoding method.

The coefficient information memory 56 stores coefficient information encoded by the first encoding method. In addition, the restoration information memory 58 stores restoration information encoded by the first encoding method. In a case where the operation is executed on the coefficient identified by the coefficient position (m) among the plurality of coefficients included in the cost function, the solving circuit 60 performs the following processing.

Note that, in the case of the Ising problem, the coefficient position (m) is information designating the row number and the column number of the matrix (J) or information designating the position of the element of the bias coefficient array (h). Furthermore, in the case of the cost function of the QUBO problem, the coefficient position (m) is information designating the row number and the column number of the matrix (Q).

First, the solving circuit 60 provides the coefficient position (m) to the coefficient information memory 56, and reads the identification value ($cW_m$) corresponding to the coefficient position (m) from the coefficient information stored in the coefficient information memory 56. Subsequently, the solving circuit 60 gives the read identification value ($cW_m$) to the restoration information memory 58, and reads the restoration value corresponding to the identification value ($cW_m$) from the restoration information stored in the restoration information memory 58. Accordingly, the solving circuit 60 can restore the restoration value corresponding to the coefficient included in the designated coefficient position (m) based on the coefficient information and the restoration information encoded by the first encoding method.

Then, the solving circuit 60 executes an operation on the coefficient identified by the coefficient position (m) among the plurality of coefficients using the restoration value read from the restoration information memory 58.

By using the coefficient information and the restoration information generated by the first encoding method as described above, the information processing system 10 can greatly reduce the amount of data transmitted from the host device 20 to the solver device 30 without degrading the plurality of coefficients. Furthermore, the information processing system 10 can reduce the memory capacity of the coefficient information memory 56 included in the solver device 30.

Furthermore, in a case where the information processing system 10 solves a combinatorial optimization problem in which the number of types of possible values of the plurality of coefficients is very small with respect to the number of the plurality of coefficients included in the cost function, it is preferable to apply such a first encoding method.

For example, the information processing system 10 may apply the first encoding method in a case where the bipartite graph maximum matching problem is solved. The bipartite graph maximum matching problem formulated in the QUBO model is expressed by Expression (11 -1), Expression (11 -2), Expressions (11 -3) and (11 -4).

$$b_{i,j} = \begin{cases} 1 \\ 0 \end{cases} \qquad \cdots (11\text{--}1)$$

$$H_{total} = H_{cost} + AH_{penalty} \qquad \cdots (11\text{--}2)$$

$$H_{cost} = -\sum_{i=1}^{N_0} \sum_{j=1}^{N_0} MR(i,j) b_{i,j} \qquad \cdots (11\text{--}3)$$

$$H_{penalty} = \sum_{i=1}^{N_0} \left( \sum_{j=1}^{N_0} b_{i,j} - 1 \right)^2 + \sum_{j=1}^{N_0} \left( \sum_{i=1}^{N_0} b_{i,j} - 1 \right)^2 \qquad \cdots (11\text{--}4)$$

$b_{i,j}$ represents a decision variable that is 1 in a case where the i-th object and the j-th object match and 0 in a case where they do not. i and j are integers of one or more and $N_O$ or less. $N_O$ represents the number of objects and is an integer of two or more. A is a constant representing the strength of $H_{penalty}$. $MR(i,j)$ represents a ratio at which the i-th object and the j-th object match.

In a case where the QUBO model represented by Expressions (11-1) to (11-4) is converted into the Ising model, a possible value of each of the plurality of coefficients included in the J matrix is -0.5A or 0. That is, the number of types of the plurality of coefficients included in the J matrix is two. Therefore, when solving the bipartite graph maximum matching problem, the information processing system 10 can greatly reduce the amount of data transmitted from the host device 20 to the solver device 30 by using the coefficient information and the restoration information generated by the first encoding method.

Furthermore, for example, the information processing system 10 may apply the first encoding method when solving the maximum independent set problem. The maximum independent set problem formulated in the QUBO model is expressed by Expressions (12-1), (12-2), (12-3), and (12-4) .

$$b_i = \begin{cases} 1 \\ 0 \end{cases} \qquad \cdots (12\text{-}1)$$

$$H_{total} = H_{cost} + A H_{penalty} \qquad \cdots (12\text{-}2)$$

$$H_{cost} = -\sum_i b_i \qquad \cdots (12\text{-}3)$$

$$H_{penalty} = \sum_{ij \in E} b_i b_j \qquad \cdots (12\text{-}4)$$

Note that the target graph of the maximum independent set problem is expressed as $G = (V, E)$. V represents a set of vertices. E represents a set of edges.

$b_i$ represents a decision variable that is 1 in a case where the i-th vertex in the set of vertices (V) is an element of the independent set and 0 in a case where the i-th vertex is not an element. A is a constant representing the strength of $H_{penalty}$. $b_i b_j$ represents 1 in a case where there is an edge from the i-th vertex to the j-th vertex, and 0 in a case where there is no edge.

In a case where the QUBO model represented by Expressions (12-1) to (12-4) is converted into the Ising model, a possible value of each of the plurality of coefficients included in the J matrix is -0.5A or 0. That is, the number of types of the plurality of coefficients included in the J matrix is two. Therefore, when solving the maximum independent set problem, the information processing system 10 can greatly reduce the amount of data transmitted from the host device 20 to the solver device 30 by using the coefficient information and the restoration information generated by the first encoding method.

Second Encoding Method

Next, the second encoding method of the coefficient information and the restoration information will be described.

Fig. 10 is a diagram illustrating a first example of a range of possible values of a plurality of coefficients.

In the cost function, possible values of a plurality of coefficients may be distributed in a specific value region with respect to the possible range of the values expressed by the first data type. For example, in the example of Fig. 10, the plurality of coefficients included in the cost function is distributed from $V_{min}$ to $V_{max}$ ($V_{min}$ and $V_{max}$ are real numbers represented by the first data type).

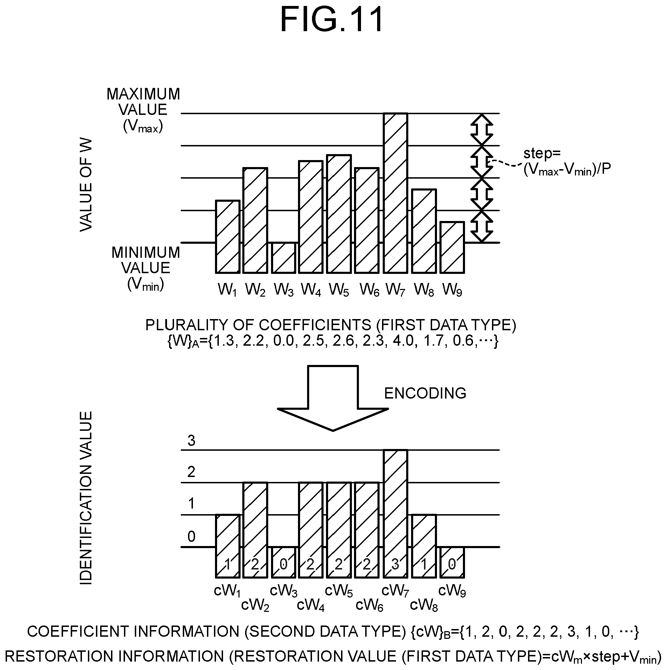

Fig. 11 is a diagram for describing a second encoding method.

For example, it is assumed that possible values of a plurality of coefficients included in the cost function are distributed in a specific value region. In this case, the encoding unit 46 generates P value regions obtained by dividing a range of possible values of the plurality of coefficients into P value regions. Note that the range of possible values of the plurality of coefficients is a range from the minimum value ($V_{min}$) of the plurality of coefficients to the maximum value ($V_{min}$) of the plurality of coefficients.

Furthermore, the encoding unit 46 generates P different identification values each expressed by the second data type. Then, the encoding unit 46 allocates the p-th identification value among the P identification values to the p-th value region among the P value regions. That is, the encoding unit 46 allocates P identification values to the P value regions on a one-to-one basis.

Furthermore, the encoding unit 46 allocates the p-th restoration value among the P restoration values to the p-th value region among the P value regions. That is, the encoding unit 46 allocates the P restoration values to the P value regions on a one-to-one basis.

Note that the p-th restoration value is a value included in the p-th value region. In this example, the p-th restoration value is the minimum value in the p-th value region. The p-th restoration value may be a maximum value or an intermediate value in the p-th value region.

Furthermore, the encoding unit 46 generates restoration information indicating a correspondence relationship between the P identification values and the P restoration values. For example, the restoration information is a function that outputs the p-th restoration value by inputting the p-th identification value.

For example, in a case where the width of the value in each of the P value regions is step and the p-th identification value is $cW_m$, the encoding unit 46 generates a function represented by $\{ (cW_m \times step) + V_{min} \}$ as the restoration information. Note that step is calculated by $(V_{max} - V_{min})/P$.

Note that the restoration information may be a function represented by $\{(cW_m \times step) + V_{min} + V_{off}\}$. $V_{off}$ is any value equal to or more than 0 and equal to or less than step.

Then, the encoding unit 46 generates coefficient information in which each of the plurality of coefficients is replaced with an identification value corresponding to a target coefficient among the P identification values. For example, instead of the first coefficient among the plurality of coefficients, the encoding unit 46 generates coefficient information including a first identification value for identifying a value region including the first coefficient among the P identification values.

In the example of Fig. 11, the minimum value ($V_{min}$) is 0.0. The maximum value ($V_{max}$) is 4.0. P is 4. In this case, the encoding unit 46 generates four identification values of "0", "1", "2", and "3" expressed by a 2-bit data type. Then, the encoding unit 46 allocates "0" as the identification value to the value region of 0.0 or more and less than 1.0, allocates "1" as the identification value to the value region of 1.0 or more and less than 2.0, allocates "2" as the identification value to the value region of 2.0 or more and less than 3.0, and allocates "3" as the identification value to the value region of 3.0 or more and 4.0 or less.

Further, the encoding unit 46 generates a function representing $\{(cW_m \times step) + V_{min}\}$ as the restoration information. In this example, step is 1.0, and $V_{min}$ is 0.0.

Furthermore, the encoding unit 46 further generates coefficient information ($\{cW\}_B$) in which each of the plurality of coefficients ($\{W\}_A$) included in the cost function is replaced with a corresponding identification value. In the example of Fig. 11, the encoding unit 46 replaces a coefficient of 0.0 or more and less than 1.0 with an identification value representing "0", replaces a coefficient of 1.0 or more and less than 2.0 with an identification value representing "1", replaces a coefficient of 2.0 or more and less than 3.0 with an identification value representing "2", and replaces a coefficient of 3.0 or more and 4.0 or less with an identification value representing "3" of the plurality of coefficients ($\{W\}_A$).

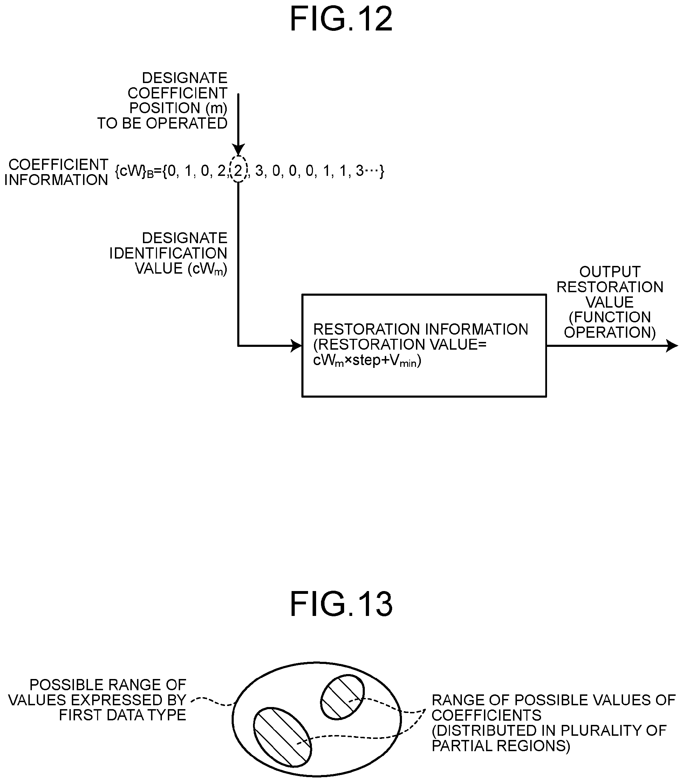

Fig. 12 is a diagram illustrating an example of a restoration method of restoring the restoration value from the coefficient information and the restoration information encoded by the second encoding method.

The coefficient information memory 56 stores coefficient information encoded by the second encoding method. In addition, the restoration information memory 58 stores restoration information encoded by the second encoding method. In a case where the operation is executed on the coefficient identified by the coefficient position (m) among the plurality of coefficients included in the cost function, the solving circuit 60 performs the following processing.

First, the solving circuit 60 provides the coefficient position (m) to the coefficient information memory 56, and reads the identification value ($cW_m$) corresponding to the coefficient position (m) from the coefficient information stored in the coefficient information memory 56. Subsequently, the solving circuit 60 acquires a function of outputting a restoration value from the restoration information memory 58. Then, the solving circuit 60 inputs the read identification value ($cW_m$) to the function to calculate a restoration value corresponding to the identification value ($cW_m$). As a result, the solving circuit 60 can restore the restoration value corresponding to the coefficient included in the designated coefficient position (m) based on the coefficient information and the restoration information encoded by the second encoding method.

Then, the solving circuit 60 executes an operation on the coefficient identified by the coefficient position (m) among the plurality of coefficients using the calculated restoration value.

By using the coefficient information and the restoration information generated by the second encoding method as described above, the information processing system 10 can reduce degradation of the plurality of coefficients and greatly reduce the amount of data transmitted from the host device 20 to the solver device 30. Furthermore, the information processing system 10 can reduce the memory capacity of the coefficient information memory 56 included in the solver device 30.

Next, the third encoding method of the coefficient information and the restoration information will be described.

Fig. 13 is a diagram illustrating a second example of a range of possible values of a plurality of coefficients.

In the cost function, possible values of a plurality of coefficients may be distributed in a plurality of partial regions with respect to the possible range of the values expressed by the first data type. For example, in the example of Fig. 13, the plurality of coefficients in the cost function is included in any of the two partial regions.

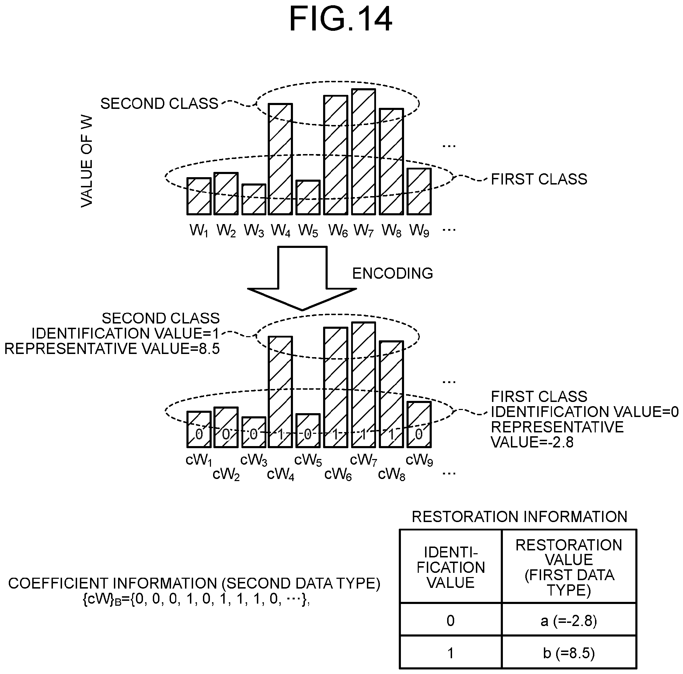

Fig. 14 is a diagram for describing the third encoding method.

For example, it is assumed that possible values of a plurality of coefficients included in the cost function are distributed in a plurality of partial regions. In this case, the encoding unit 46 clusters and divides the plurality of coefficients into P classes. As a result, the encoding unit 46 can generate P classes each including an approximate coefficient group. Note that P varies depending on a distribution status of a plurality of coefficients, a clustering algorithm, or the like.

Furthermore, the encoding unit 46 generates P different identification values each expressed by the second data type. Then, the encoding unit 46 allocates the p-th identification value among the P identification values to the p-th class among the P classes. That is, the encoding unit 46 allocates P identification values to the P classes on a one-to-one basis.

Furthermore, the encoding unit 46 allocates the p-th restoration value to the p-th class among the P classes. That is, the encoding unit 46 allocates the P restoration values to the P classes on a one-to-one basis.

Note that the p-th restoration value is a value of representing the coefficient group included in the p-th class. For example, the p-th restoration value is the minimum value, the median value, the average value, or the maximum value of the coefficient group included in the p-th class.

Furthermore, the encoding unit 46 generates restoration information indicating a correspondence relationship between the P identification values and the P restoration values. For example, the restoration information is a table indicating that the p-th restoration value corresponds to the p-th identification value.

Then, the encoding unit 46 generates coefficient information in which each of the plurality of coefficients is replaced with an identification value corresponding to a target coefficient among the P identification values. For example, the encoding unit 46 generates coefficient information including a first identification value for identifying a class including the first coefficient among the P identification values, instead of the first coefficient among the plurality of coefficients.

In the example of Fig. 14, the encoding unit 46 divides the plurality of coefficients into two classes. In this case, the encoding unit 46 generates two identification values of "0" and "1" expressed by a 1-bit data type. Then, the encoding unit 46 allocates "0" as the identification value to the first class and allocates "1" as the identification value to the second class.

In the example of Fig. 14, the encoding unit 46 calculates "-2.8" that is the median value of the coefficient group included in the first class as the representative value of the first class, and calculates "8.5" that is the median value of the coefficient group included in the first class as the representative value of the second class.

Further, in the example of Fig. 14, the encoding unit 46 generates restoration information indicating a table in which a restoration value indicating "-2.8" that is a representative value of the first class corresponds to an identification value indicating "0", and a restoration value indicating "8.5" corresponds to an identification value indicating "1".

Furthermore, in the example of Fig. 14, the encoding unit 46 generates coefficient information ($\{cW\}_B$) in which each of the plurality of coefficients ($\{W\}_A$) included in the cost function is replaced with a corresponding identification value. In this case, the encoding unit 46 replaces a coefficient included in the first class of the plurality of coefficients ($\{W\}_A$) with an identification value representing "0", and replaces a coefficient included in the second class with an identification value representing "1".

In a case where the coefficient information and the restoration information encoded by the third encoding method are used, the solving circuit 60 restores the restoration value as in the restoration method illustrated in Fig. 9. Then, the solving circuit 60 executes an operation on the coefficient identified by the coefficient position (m) among the plurality of coefficients using the calculated restoration value.

By using the coefficient information and the restoration information generated by the third encoding method as described above, the information processing system 10 can reduce degradation of the plurality of coefficients and greatly reduce the amount of data transmitted from the host device 20 to the solver device 30. Furthermore, the information processing system 10 can reduce the memory capacity of the coefficient information memory 56 included in the solver device 30.

Next, the fourth encoding method of the coefficient information and the restoration information will be described.

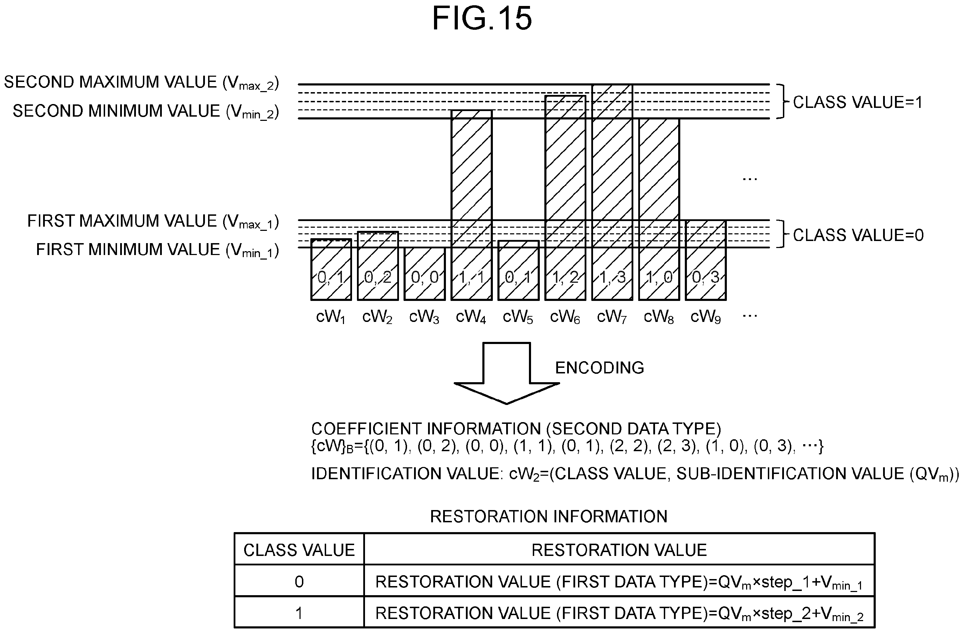

Fig. 15 is a diagram for describing the fourth encoding method.

For example, it is assumed that possible values of a plurality of coefficients included in the cost function are distributed in a plurality of partial regions as illustrated in Fig. 13. In this case, the encoding unit 46 clusters and divides the plurality of coefficients into P classes. Note that S is an integer of two or more, and varies depending on a distribution status of a plurality of coefficients, a clustering algorithm, or the like.

The encoding unit 46 generates S class values different from each other. Then, the encoding unit 46 allocates the s-th class value among the S class values to the s-th class, where s is an integer of one or more and S or less, among the S classes. That is, the encoding unit 46 allocates S class values to the S classes on a one-to-one basis.

The encoding unit 46 generates T value regions obtained by dividing a range of possible values of the included coefficient group into T, where T is an integer of two or more, for each of the S classes. T is an integer of two or more. For example, the encoding unit 46 generates T value regions obtained by dividing the range of possible values of the coefficient group included in the s-th class into T for the s-th class. Note that the range of possible values of the coefficient group included in the s-th class is a range from the minimum value ($V_{min\_s}$) in the coefficient group included in the s-th class to the maximum value ($V_{max\_s}$) in the coefficient group included in the s-th class. In addition, T may be the same in all of the S classes, or may be a unique value for each of the S classes.

The encoding unit 46 generates T sub-identification values for each of the S classes. Then, the encoding unit 46 allocates a t-th sub-identification value among the T sub-identification values to a t-th value region, where t is an integer of one or more and T or less, among the T value regions for each of the S classes. That is, the encoding unit 46 allocates T sub-identification values to T value regions on a one-to-one basis for each of the S classes.

Furthermore, the encoding unit 46 allocates the t-th restoration value among the T restoration values to the t-th value region among the T value regions for each of the S classes. That is, the encoding unit 46 allocates T restoration values to T value regions on a one-to-one basis for each of the S classes.

Note that, for each of the S classes, the t-th restoration value is a value included in the t-th value region. In the present example, the t-th restoration value is the minimum value in the t-th value region. The t-th restoration value may be a maximum value or an intermediate value in the t-th value region.

Then, the encoding unit 46 generates restoration information indicating a correspondence relationship between T sub-identification values and T restoration values for each of the S classes. For example, the encoding unit 46 generates restoration information representing a function that outputs a t-th restoration value by inputting the t-th sub-identification value for each of the S classes.

For example, for the s-th class, in a case where the width of the value in each of the T value regions is step_s and the t-th sub-identification value is $QW_m$, the encoding unit 46 generates a function represented by $\{(QW_m \times step\_s) + V_{min\_s}\}$ as the restoration information. Note that step_s is calculated by $(V_{max\_s} - V_{min\_s})/T$. $V_{max\_s}$ is the maximum value of the coefficient group included in the s-th class. $V_{min\_s}$ is the minimum value of the coefficient group included in the s-th class.

Note that the restoration information may be a function represented by $\{(QV_m \times step\_s) + V_{min\_s} + V_{off\_s}\}$. $V_{off\_s}$ is any value equal to or more than 0 and equal to or less than step_s.

Further, the encoding unit 46 generates coefficient information in which each of the plurality of coefficients is replaced with an identification value expressed by the second data type.

Here, the identification value is represented by a set of a class value and a sub-identification value. The set of the class value and the sub-identification value is expressed by the second data type. The identification value may be an array including two values, or may be an integer value including a class value in a high-order digit and a sub-identification value in a low-order digit. In a case where the number of sets of the class value and the sub-identification value is P, each of the plurality of coefficients is included in any one of the P groups.

For example, the encoding unit 46 generates coefficient information including a first identification value instead of the first coefficient among the plurality of coefficients. In this case, the first identification value represents a set of a class value for identifying a class including the first coefficient among the S classes and a sub-identification value for identifying a value region including the first coefficient among the T value regions in the class including the first coefficient.

In the example of Fig. 15, the encoding unit 46 classifies a plurality of coefficients into two classes. In this case, the encoding unit 46 generates two class values of "0" and "1" expressed by a 1-bit data type. Then, the encoding unit 46 allocates "0" as the class value to the first class and allocates "1" as the class value to the second class.

Further, in Fig. 15, the encoding unit 46 generates restoration information in which a function representing $\{(QW_m \times step\_1) + V_{min\_1}\}$ corresponds to the first class and a function representing $\{(QW_m \times step\_2) + V_{min\_2}\}$ corresponds to the second class.

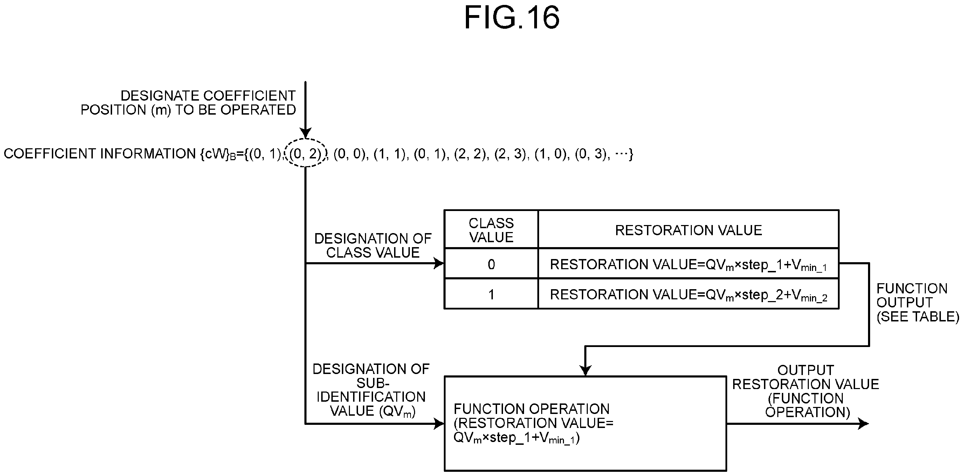

Fig. 16 is a diagram illustrating an example of a restoration method of restoring the restoration value from the coefficient information and the restoration information encoded by the fourth encoding method.

The coefficient information memory 56 stores coefficient information encoded by the fourth encoding method. In addition, the restoration information memory 58 stores restoration information encoded by the fourth encoding method. In a case where the operation is executed on the coefficient identified by the coefficient position (m) among the plurality of coefficients included in the cost function, the solving circuit 60 performs the following processing.

First, the solving circuit 60 provides the coefficient position (m) to the coefficient information memory 56, and reads the identification value $(cW_m)$ corresponding to the coefficient position (m) from the coefficient information stored in the coefficient information memory 56. Subsequently, the solving circuit 60 extracts the class value and the sub-identification value $(QV_m)$ from the read identification value $(cW_m)$. Subsequently, the solving circuit 60 gives the class value to the restoration information memory 58, and reads a function corresponding to the class value from the restoration information stored in the restoration information memory 58. Subsequently, the solving circuit 60 inputs the sub-identification value $(QV_m)$ to the read function to calculate a restoration value. Accordingly, the solving circuit 60 can restore the restoration value corresponding to the coefficient included in the designated coefficient position (m) based on the coefficient information and the restoration information encoded by the fourth encoding method.

Then, the solving circuit 60 executes an operation on the coefficient identified by the coefficient position (m) among the plurality of coefficients using the calculated restoration value.

By using the coefficient information and the restoration information generated by the fourth encoding method as described above, the information processing system 10 can reduce degradation of the plurality of coefficients and greatly reduce the amount of data transmitted from the host device 20 to the solver device 30. Furthermore, the information processing system 10 can reduce the memory capacity of the coefficient information memory 56 included in the solver device 30.

Second Arrangement

Next, the information processing system 10 according to a second arrangement will be described.

The information processing system 10 according to the second arrangement is the same as that of the first arrangement described with reference to Figs. 1 to 16 except for the solving circuit 60 in the solver device 30. Hereinafter, elements having substantially the same functions and configurations as those of the first arrangement will be denoted by the same reference numerals, and detailed description thereof will be omitted except for differences.

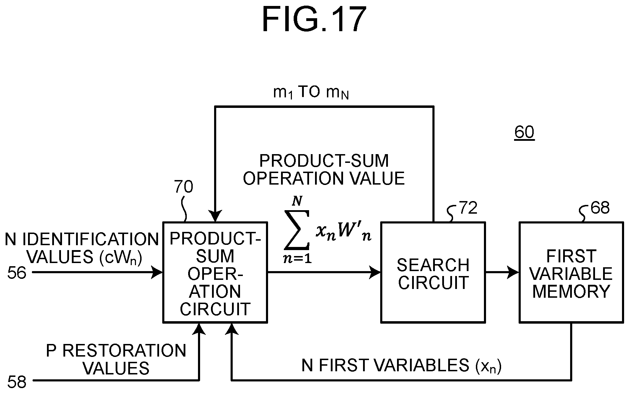

Fig. 17 is a diagram illustrating an example of a configuration of the solving circuit 60 according to the second arrangement.

The solving circuit 60 includes a first variable memory 68, a product-sum operation circuit 70, and a search circuit 72.

The first variable memory 68 stores N first variables ($x_1$ to $x_N$). N represents the number of decision variables included in the cost function. The n-th first variable, where n is an integer of one or more and N or less, among the N first variables ($x_1$ to $x_N$) corresponds to the n-th decision variable ($s_n$) among the N decision variables ($s_1$ to $s_N$). For example, in a case where the solver device 30 is a simulated bifurcation machine, the N first variables ($x_1$ to $x_N$) correspond to the N position variables.

In the present arrangement, each of the N first variables ($x_1$ to $x_N$) is expressed by a third data type having a smaller data size than the first data type. Each of the N first variables ($x_1$ to $x_N$) may have the first data type.

The product-sum operation circuit 70 acquires and stores the P restoration values expressed by the restoration information stored in the restoration information memory 58 prior to the solving process.

The product-sum operation circuit 70 receives designation of coefficient positions ($m_1$ to $m_N$) of N coefficients among the plurality of coefficients included in the cost function from the search circuit 72. When receiving the designation of the coefficient positions ($m_1$ to $m_N$), the product-sum operation circuit 70 reads N identification values ($cW_1$ to $cW_N$) included instead of the designated coefficient positions ($m_1$ to $m_N$) from the coefficient information stored in the coefficient information memory 56. When receiving the designation of the coefficient position ($m_1$ to $m_N$), the product-sum operation circuit 70 reads N first variables ($x_1$ to $x_N$) from the first variable memory 68.

When acquiring N identification values ($cW_1$ to $cW_N$), the product-sum operation circuit 70 executes a product-sum operation on N first variables ($x_1$ to $x_N$) and N restoration values ($W'_1$ to $W'_N$) corresponding to the N coefficients. Specifically, the product-sum operation circuit 70 executes an operation shown in Expression (21).

$$\sum_{n=1}^{N} x_n W'_n \qquad \cdots (21)$$

Then, the product-sum operation circuit 70 gives the operation result to the search circuit 72 as a product-sum operation value of the N first variables ($x_1$ to $x_N$) and the N coefficients of the designated coefficient positions ($m_1$ to $m_N$).

The search circuit 72 repeats designation of the coefficient positions ($m_1$ to $m_N$) while changing the coefficient positions ($m_1$ to $m_N$) of N coefficients among the plurality of coefficients included in the cost function in the solving process. In the solving process, the search circuit 72 repeats the process of updating the N first variables ($x_1$ to $x_N$) using the product-sum operation value calculated by the product-sum operation circuit 70.

Then, the search circuit 72 repeats the process of updating the N first variables ($x_1$ to $x_N$) a predetermined number of times or for a predetermined time. Then, after completing the solving process, the search circuit 72 gives the N first variables ($x_1$ to $x_N$) stored in the first variable memory 68 to the ground state output circuit 62. Based on the N first variables ($x_1$ to $x_N$) stored in the first variable memory 68, the ground state output circuit 62 generates the ground state information ($s^{opt}$) indicating the value of each of the N decision variables ($s_1$ to $s_N$) to output the ground state information ($s^{opt}$) to the host device 20.

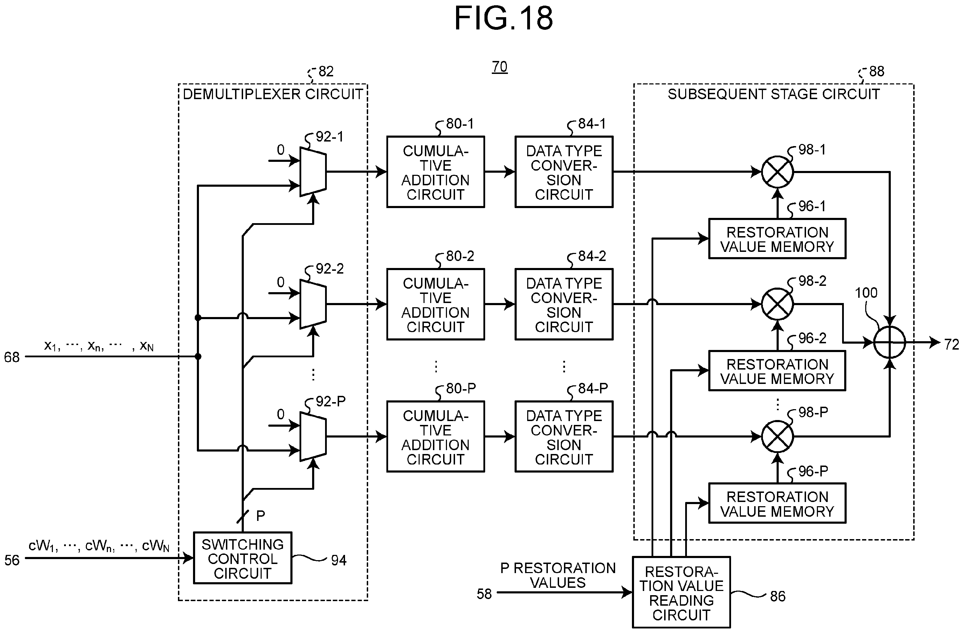

Fig. 18 is a diagram illustrating a configuration of the product-sum operation circuit 70.

The product-sum operation circuit 70 includes P cumulative addition circuits 80 (80-1 to 80-P), a demultiplexer circuit 82, P data type conversion circuits 84 (84-1 to 84-P), a restoration value reading circuit 86, and a subsequent stage circuit 88.

The P cumulative addition circuits 80 correspond to the P groups included in the plurality of coefficients on a one-to-one basis. That is, the p-th cumulative addition circuit 80-p among the P cumulative addition circuits 80 corresponds to the p-th group among the P groups. Note that the P groups vary depending on the content of the plurality of coefficients and the encoding method of the coefficient information and the restoration information. Therefore, the product-sum operation circuit 70 selects the P cumulative addition circuits 80 from among the large number of cumulative addition circuits 80 based on the restoration information and causes the P cumulative addition circuits 80 to function before execution of processing.

Each of the P cumulative addition circuits 80 stores a cumulative value. Each of the P cumulative addition circuits 80 adds the acquired value to the stored cumulative value. Each of the P cumulative addition circuits 80 resets the stored cumulative value to 0 before the demultiplexer circuit 82 acquires the N first variables ($x_1$ to $x_N$).

The demultiplexer circuit 82 sequentially acquires N identification values ($cW_1$ to $cW_N$) included in the designated coefficient positions ($m_1$ to $m_N$) one by one from the coefficient information stored in the coefficient information memory 56. Further, the demultiplexer circuit 82 sequentially acquires N first variables ($x_1$ to $x_N$) one by one from the first variable memory 68. In this case, the demultiplexer circuit 82 synchronously acquires the n-th first variable ($x_n$) among the N first variables ($x_1$ to $x_N$) and the n-th identification value ($cW_n$) among the N identification values ($cW_1$ to $cW_N$).

The demultiplexer circuit 82 gives each of the N first variables ($x_1$ to $x_N$) to any cumulative addition circuit 80 among the P cumulative addition circuits 80. More specifically, when acquiring the n-th first variable ($x_n$) among the N first variables ($x_1$ to $x_N$), the demultiplexer circuit 82 gives the n-th first variable ($x_n$) to the cumulative addition circuit 80 corresponding to the group identified by the n-th identification value ($cW_n$) among the N identification values ($cW_1$ to $cW_N$).

For example, the demultiplexer circuit 82 includes P selectors 92 (92-1 to 92-P) and a switching control circuit 94.

The P selectors 92 correspond to the P cumulative addition circuits 80 on a one-to-one basis. The p-th selector 92-p among the P selectors 92 corresponds to the p-th cumulative addition circuit 80-p. Note that the product-sum operation circuit 70 selects the P selectors 92 from among the large number of selectors 92 and causes the P selectors 92 to function, as in the P cumulative addition circuits 80, before execution of processing.

Each of the P selectors 92 sequentially acquires N first variables ($x_1$ to $x_N$) one by one. When acquiring the n-th first variable ($x_n$) among the N first variables ($x_1$ to $x_N$), each of the P selectors 92 gives either the n-th first variable ($x_n$) or 0 to the corresponding cumulative addition circuit 80.

The switching control circuit 94 sequentially acquires N identification values ($cW_1$ to $cW_N$) one by one. When acquiring the n-th identification value ($cW_n$), the switching control circuit 94 causes the selector 92 corresponding to the group identified by the n-th identification value ($cW_n$) among the P selectors 92 to output the n-th first variable ($x_n$), and causes the other selectors 92 to output 0. For example, in a case where the n-th identification value ($cW_n$) identifies the p-th group among the P groups, the switching control circuit 94 causes the selector 92-p corresponding to the p-th group among the P selectors 92 to output the n-th first variable ($x_n$), and causes the other selectors 92 to output 0.

When acquiring the n-th first variable ($x_n$) among the N first variables ($x_1$ to $x_N$), such a demultiplexer circuit 82 can give the n-th first variable ($x_n$) to the cumulative addition circuit 80 corresponding to the group identified by the n-th identification value ($cW_n$) among the N identification values ($cW_1$ to $cW_N$) among the P cumulative addition circuits 80, and add the n-th first variable ($x_n$) to the stored cumulative value.

Therefore, the p-th cumulative addition circuit 80-n among the P cumulative addition circuits 80 can execute the operation shown in Expression (22).

$$ACC_p = \sum_{n=1}^{N} Z_n$$
$$\begin{aligned} &if \ \ cW_n = p \\ & \quad Z_n = x_n \\ &else \\ & \quad Z_n = 0 \end{aligned} \qquad \cdots (22)$$

Note that, in Expression (22), $ACC_p$ represents a cumulative value stored in the p-th cumulative addition circuit 80-n. In addition, $cW_n = p$ indicates that the n-th identification value identifies the p-th group.

Each of the P cumulative addition circuits 80 stores a cumulative value expressed by the third data type. Therefore, each of the P cumulative addition circuits 80 adds the cumulative value expressed by the third data type to the first variables ($x_1$ to $x_N$) expressed by the third data type.

The P data type conversion circuits 84 correspond to the P cumulative addition circuits 80 on a one-to-one basis. That is, the p-th data type conversion circuit 84-p among the P data type conversion circuits 84 corresponds to the p-th cumulative addition circuit 80-p. Note that the product-sum operation circuit 70 selects the P data type conversion circuits 84 from among a large number of data type conversion circuits 84 and causes the P data type conversion circuits 84 to function, as in the P cumulative addition circuits 80, before execution of processing.

Each of the P data type conversion circuits 84 acquires a cumulative value from the corresponding cumulative addition circuit 80 among the P cumulative addition circuits 80. Then, each of the P data type conversion circuits 84 converts the acquired cumulative value from the third data type to the first data type and gives the converted cumulative value to the subsequent stage circuit 88. That is, the p-th data type conversion circuit 84-p converts the cumulative value acquired from the p-th cumulative addition circuit 80-p from the third data type to the first data type and gives the first data type to the subsequent stage circuit 88.

The restoration value reading circuit 86 acquires the P restoration values indicated by the restoration information stored in the restoration information memory 58 prior to the solving process. The restoration value reading circuit 86 gives the P acquired restoration values to the subsequent stage circuit 88 and stores the restoration values therein prior to the solving process.

The subsequent stage circuit 88 acquires and stores P restoration values each represented by the first data type prior to the solving process. In addition, the subsequent stage circuit 88 acquires P cumulative values represented by the first data type from the P data type conversion circuits 84. Then, the subsequent stage circuit 88 performs a product-sum operation on the P cumulative values each expressed by the first data type and the P restoration values each expressed by the first data type.

That is, the subsequent stage circuit 88 executes the operation shown in Expression (23).

$$\sum_{p=1}^{P} ACC_p W'_p \qquad \cdots (23)$$

In Expression (23), Wp' represents the p-th restoration value among the P restoration values. $ACC_p$ represents a p-th cumulative value expressed by the first data type.

Then, after acquiring all the N first variables ($x_1$ to $x_N$), the subsequent stage circuit 88 outputs a value obtained by performing a product-sum operation on the P cumulative values and the P restoration values calculated in this manner as a product-sum operation value.

For example, the subsequent stage circuit 88 includes P restoration value memories 96 (96-1 to 96-P), P multiplication circuits 98 (98-1 to 98-P), and an addition circuit 100. Note that the product-sum operation circuit 70 selects the P restoration value memories 96, the P restoration value memories 96, and the P multiplication circuits 98 from among the large number of restoration value memories 96, the large number of restoration value memories 96, and the large number of multiplication circuits 98 and causes the P restoration value memories 96, the P restoration value memories 96, and the P multiplication circuits 98 to function, as in the P cumulative addition circuits 80, before execution of processing.

The P restoration value memories 96 correspond to the P groups on a one-to-one basis. Each of the P restoration value memories 96 stores a restoration value associated with an identification value for identifying a corresponding group. That is, the p-th restoration value memory 96-p among the P restoration value memories 96 stores the restoration value associated with the identification value for identifying the p-th group.

The P multiplication circuits 98 correspond to the P groups on a one-to-one basis. Each of the P multiplication circuits 98 acquires a cumulative value represented by the first data type in the corresponding group. That is, the p-th multiplication circuit 98-p of the P multiplication circuits 98 acquires the cumulative value stored in the p-th cumulative addition circuit 80-p via the p-th data type conversion circuit 84-p. In addition, each of the P multiplication circuits 98 acquires the restoration value expressed by the first data type in the corresponding group. That is, the p-th multiplication circuit 98-p acquires the restoration value stored in the p-th restoration value memory 96-p.

Then, each of the P multiplication circuits 98 calculates a multiplication value obtained by multiplying the cumulative value expressed by the acquired first data type by the restoration value expressed by the acquired first data type.

The addition circuit 100 acquires P multiplication values calculated by the P multiplication circuits 98. Then, the addition circuit 100 outputs a value obtained by adding all of the P multiplication values as a product-sum operation value.

Generally, in a case where the data type of each of the plurality of coefficients is the first data type with high accuracy and a wide value range, the value obtained by multiplying the coefficient by the first variable also exists in the same range with high accuracy and a wide value range of the first data type. Therefore, in a case where the product-sum operation is performed without deteriorating the accuracy and the value range, the input/output data of each arithmetic unit included in the product-sum operation unit is required to be a data type with high accuracy and a broadband corresponding to the first data type.

However, when focusing on the P cumulative addition circuits 80, the product-sum operation circuit 70 according to the second arrangement performs a process of adding the first variables ($x_1$ to $x_N$), and thus, does not perform an operation on a coefficient whose data type has high accuracy and a wide value range. The first variables ($x_1$ to $x_N$) are limited to, for example, -1.0 or more and 1.0 or less in a case where the Ising machine is a ballistic simulated bifurcation algorithm (Expressions (5-1) to (5-3)). Furthermore, the first variables ($x_1$ to $x_N$) are limited to -1 or 1, for example, in a case where the Ising machine is a discrete simulated bifurcation algorithm (Expressions (6-1) to (6-3)). Therefore, in a case where the first variables ($x_1$ to $x_N$) are expressed by a data type having a size smaller than the data size of the first data type, the product-sum operation circuit 70 according to the second arrangement can include P cumulative addition circuits 80 in which the data type of the input data has relatively low accuracy, for example, in a narrow band of a fixed value range.

As described above, since the product-sum operation circuit 70 includes a circuit that executes the operation of data of a data type with relatively low accuracy and a narrow band, it is possible to reduce resources required for implementation and increase the operation speed as compared with a general product-sum operation unit that is required to input/output data of a data type with high accuracy and a wide value range. Therefore, the product-sum operation circuit 70 can execute an operation with accuracy similar to that of a product-sum operation unit that is required to input/output data of a data type with high accuracy and a wide value range with less speed, less power consumption, and the like.

As described above, the information processing system 10 according to the second arrangement can reduce the amount of data transfer from the host device 20 to the solver device 30 by eliminating or reducing deterioration of a plurality of coefficients, as in the first arrangement. Furthermore, the information processing system 10 can reduce the storage capacity of the coefficient information memory 56 of the solver device 30. Furthermore, the information processing system 10 according to the second arrangement can efficiently execute the product-sum operation executed in the solver device 30.

Third Arrangement

Next, a market system 200 according to the third arrangement will be described.
The information processing system 10 described in the first arrangement and the second arrangement can be applied to the market system 200.

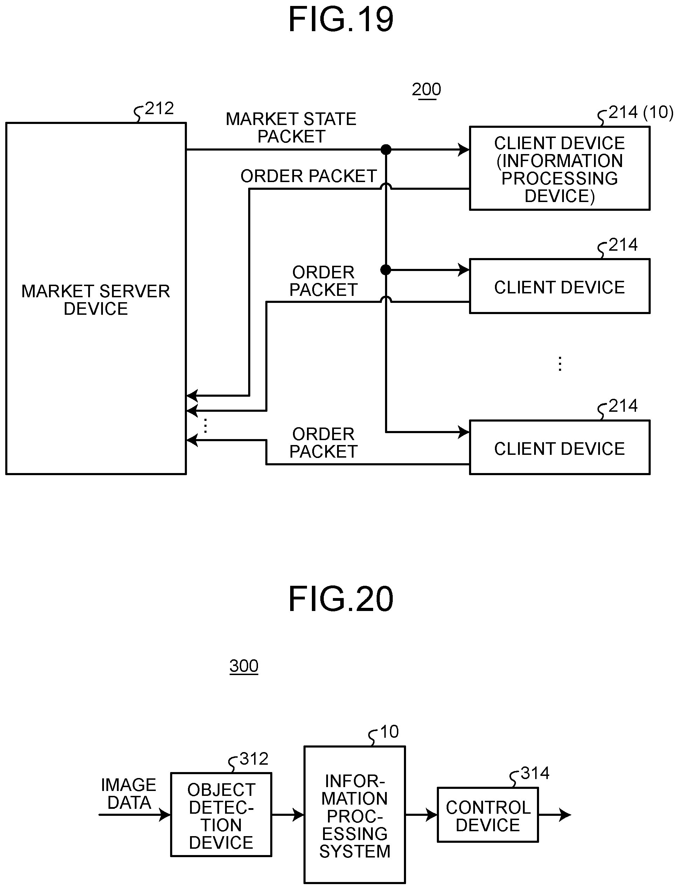

Fig. 19 is a diagram illustrating a configuration of the market system 200. The market system 200 executes electronic transactions of a plurality of targets by a plurality of participants. More specifically, the market system 200 receives a buy order and a sell order from each of the plurality of participants for each of the plurality of targets, matches the price and the quantity of the received buy order with the price and the quantity of the sell order, and electronically establishes a transaction.
For example, the market system 200 executes trade transactions of a plurality of stocks (a plurality of names of stocks) as electronic transactions of a plurality of targets. Note that the target is not limited to stocks as long as it can be traded in the market, and may be securities such as bonds, stock investment trusts, real estate investment trusts, and futures thereof, financial products such as foreign exchange, interest rates, and interest rate futures, products such as gold, crude oil, and grains, and product futures thereof.
The market system 200 includes a market server device 212 and a plurality of client devices 214.
The market server device 212 is a computer used by a market manager. The market server device 212 is connected to a plurality of client devices 214 via a network.
Each of the plurality of client devices 214 is a device used by participants in the market. Each of the plurality of client devices 214 is realized by, for example, a computer.
Each of the plurality of client devices 214 determines which stock among the plurality of stocks to trade. Each of the plurality of client devices 214 generates an order packet including transaction information about the stock determined to be traded among the plurality of stocks to transmit the order packet to the market server device 212.
The market server device 212 executes transactions of a plurality of stocks. The market server device 212 receives the order packet transmitted from each of the plurality of client devices 214. The market server device 212 performs matching between the price and the quantity of the sell order and the price and the quantity of the buy order for each of the plurality of stocks, and establishes the transaction between the sell order and the buy order in which the price and the quantity match in order of reception. The market server device 212 simultaneously distributes the market state packet including information indicating a stock transaction status to a plurality of client devices 214.
Each of the plurality of client devices 214 acquires the market state packet, and determines which stock among the plurality of stocks to trade based on the information included in the acquired market state packet. Then, each of the plurality of client devices 214 generates an order packet for the determined stock to transmit the order packet to the market server device 212.
The information processing system 10 according to the present arrangement functions as part of the client device 214 in the market system 200. The information processing system 10 may be realized by a computer including a processor, a memory, and the like, or may have a configuration including a dedicated hardware circuit in addition to the processor, the memory, and the like.
Here, the information processing system 10 generates a combinatorial optimization problem based on the market state packet, solves the generated combinatorial optimization problem, and determines whether to trade for each of the plurality of stocks based on the solution of the combinatorial optimization problem obtained by the solving. Then, the information processing system 10 generates an order packet including transaction information about the stock determined to execute transaction among the plurality of stocks to transmit the order packet to the market server device 212.
As described above, the information processing system 10 is applied to the client device 214 of the market system 200, and can optimally execute electronic transactions of stocks and the like.

Fourth Arrangement

Next, a control system 300 according to the fourth arrangement will be described.
The information processing system 10 described in the first arrangement and the second arrangement can also be applied to, for example, the control system 300 that controls a movement operation in a moving object.
Fig. 20 is a diagram illustrating an example of a configuration of a control system 300 according to the fourth arrangement. The control system 300 controls, for example, a moving object that autonomously moves, such as an autonomous car, a drone, or a robot.

The control system 300 includes an object detection device 312, an information processing system 10, and a control device 314.

The object detection device 312 acquires, for example, image data from a camera that images the surroundings of the moving object to be controlled. The object detection device 312 may acquire sensor data from another sensor device in addition to the image data. The object detection device 312 detects coordinate data representing three-dimensional coordinates for each of one or a plurality of objects around the moving object based on the acquired image data, sensor data, and the like. Furthermore, the object detection device 312 may also detect three-dimensional coordinates of the moving object itself to be controlled.

The object detection device 312 irregularly and repeatedly outputs, to the information processing system 10, data including identification information for identifying any one of one or a plurality of objects and coordinate data (input information) representing coordinates of the object identified by the identification information. Note that the input information may include, in addition to the coordinate data, other related information such as the moving speed, the acceleration, the moving direction, and the type of the object identified by the identification information.

The control device 314 acquires, from the information processing system 10, output data including output information indicating that a predetermined operation is performed on the moving object in order to control the moving object. The control device 314 controls the moving object based on the acquired output data.

The information processing system 10 has the same configuration as that described in the first arrangement and the second arrangement.

The information processing system 10 generates a combinatorial optimization problem based on data irregularly given from the object detection device 312.

The information processing system 10 solves the combinatorial optimization problem and generates a solution to the combinatorial optimization problem. The information processing system 10 generates output data based on the solution of the combinatorial optimization problem to output the generated output data to the control device 314.

As described above, the information processing system 10 is applied to the control system 300, and can optimally control the moving object.

Hardware Configuration

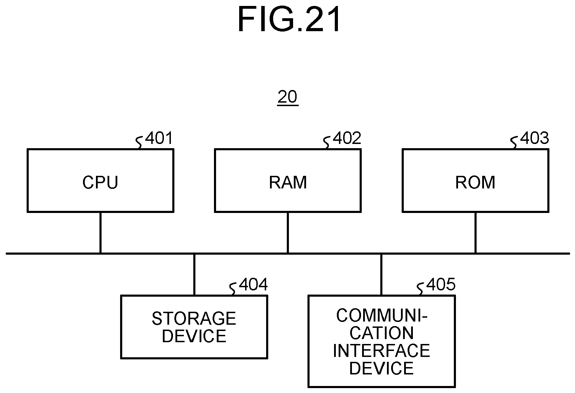

Fig. 21 is a diagram illustrating an example of a hardware configuration of a computer. The host device 20 is implemented by, for example, a computer having a hardware configuration as illustrated in Fig. 21. The host device 20 includes a central processing unit (CPU) 401, a random access memory (RAM) 402, a read only memory (ROM) 403, a storage device 404, and a communication interface device 405. These units are connected by a bus.

The CPU 401 is one or more hardware processors that execute an arithmetic process, a control process, and the like according to a program. The CPU 401 uses a predetermined region of the R_AM 402 for a work region, and executes various processes in cooperation with programs stored in the ROM 403, the storage device 404, and so forth.

The R_AM 402 is a memory such as a synchronous dynamic random access memory (SDRAM). The R_AM 402 functions as a work region of the CPU 401. The ROM 403 is a memory that stores programs and various types of information in a non-rewritable manner.

The storage device 404 is a device that writes and reads data to and from a semiconductor storage medium such as a flash memory, a magnetically or optically recordable storage medium, or the like. The storage device 404 writes and reads data to and from the storage medium under the control of the CPU 401. The communication interface device 405 communicates with an external device via a network in accordance with control from the CPU 401.

The program executed by the computer causes the computer to function as the host device 20. This program is developed on the RAM 402 and executed by the CPU 401 (processor).

In addition, the program executed by the computer is recorded in and provided by a computer-readable recording medium such as a CD-ROM, a flexible disk, a CD-R, or a digital versatile disk (DVD) as a file in a format that can be installed or executed in the computer.

Moreover, the program may be stored on a computer connected to a network such as the Internet and provided by being downloaded via the network. Moreover, the program may be provided or distributed via a network such as the Internet. In addition, the program executed by the host device 20 may be provided by being incorporated in the ROM 403 or the like in advance.

The program for causing the computer to function as the host device 20 has a module configuration including, for example, a problem acquisition module, a formulation module, an encoding module, a coefficient output module, a solution generation module, and a solution output module. This program is executed by the CPU 401 to load each module into the R_AM 402, and causes the CPU 401 to function as the problem acquisition unit 42, the formulation unit 44, the encoding unit 46, the coefficient output unit 48, the solution generation unit 50, and the solution output unit 52. In a case where the CPU 401 is a plurality of processors, these units may be divided into and carried by a plurality of processors. Note that some or all of these configurations may be configured by hardware.

The solver device 30 is implemented by, for example, a computer having a hardware configuration as illustrated in Fig. 21. In this case, the program for causing the computer to function as the solver device 30 includes, for example, an acquisition module, a solving module, and a ground state output module. This program is executed by the CPU 401 to load each module into the RAM 402, and causes the CPU 401 to function as an acquisition unit that executes a process similar to that of the acquisition circuit 54, a solving unit that executes a process similar to that of the solving circuit 60, and a ground state output unit that executes a process similar to that of the ground state output circuit 62. In a case where the CPU 401 is a plurality of processors, these units may be divided into and carried by a plurality of processors. In addition, this program causes the RAM 402 and the storage device 404 to function as the coefficient information memory 56 and the restoration information memory 58. Note that some or all of these configurations may be configured by hardware.

Furthermore, each of the host device 20 and the solver device 30 may be realized by, for example, one or more reconfigurable semiconductor devices such as a field-programmable gate array (FPGA). In addition, each of the host device 20 and the solver device 30 may be implemented by an electronic circuit including may include one or more CPUs, a microprocessor, a graphics processing unit (GPU), an application specific integrated circuit (ASIC), or a circuit thereof.

Furthermore, in a case where each of the host device 20 and the solver device 30 is realized by a reconfigurable semiconductor device such as an FPGA, circuit information (configuration data) written in the reconfigurable semiconductor device in order to operate the reconfigurable semiconductor device as each of the host device 20 and the solver device 30 may be stored on a computer connected to a network such as the Internet, and may be provided by being downloaded via a network. In addition, circuit information (configuration data) written in the reconfigurable semiconductor device in order to operate the reconfigurable semiconductor device as each of the host device 20 and the solver device 30 may be provided by being recorded in a computer-readable recording medium.

Furthermore, in a case where each of the host device 20 and the solver device 30 is realized by a semiconductor device such as ASIC, circuit information representing a configuration of a circuit described in a hardware description language used for designing and manufacturing each of the host device 20 and the solver device 30 may be stored on a computer connected to a network such as the Internet, and may be provided by being downloaded via a network. Furthermore, circuit information representing a configuration of a circuit described in a hardware description language used for designing and manufacturing each of the host device 20 and the solver device 30 may be provided by being recorded in a computer-readable recording medium.

While certain arrangements have been described, these arrangements have been presented by way of example only, and are not intended to limit the scope of the inventions. Indeed, the novel arrangements described herein may be embodied in a variety of other forms, moreover, various omissions, substitutions, and changes in the form of the arrangements described herein may be made without departing from the spirit of the inventions. The accompanying claims and their equivalents are intended to cover such forms or modifications as would fall within the scope and spirit of the inventions.

Supplement

Note that the above arrangements can be summarized in the following Technical Ideas.

(Technical Idea 1)

An information processing system for solving a combinatorial optimization problem, the information processing system including:

an information processing device that outputs coefficient information representing a plurality of coefficients in a cost function including the plurality of coefficients and N decision variables, where N is an integer of two or more; and
a solver device that calculates ground state information representing values of the N decision variables by executing a solving process for minimizing the cost function, based on the coefficient information, wherein
the information processing device:

generates the plurality of coefficients based on the combinatorial optimization problem;
encodes a first coefficient represented by a predetermined first data type among the plurality of coefficients into a first identification value represented by a second data type having a data size smaller than a data size of the first data type;
outputs, to the solver device, the coefficient information including the first identification value instead of the first coefficient;
acquires the ground state information from the solver device; and
outputs a solution of the combinatorial optimization problem based on the ground state information,

in the solving process, the solver device executes an operation on the first coefficient by using a first restoration value corresponding to the first identification value represented by restoration information, and
the first restoration value is expressed by the first data type.

(Technical Idea 2)

The information processing system according to Technical Idea 1, wherein

in encoding, the information processing device generates the restoration information based on the plurality of coefficients, and
in outputting the coefficient information, the information processing device outputs the restoration information to the solver device.

(Technical Idea 3)

The information processing system according to Technical Idea 1 or 2, wherein

each of the plurality of coefficients is expressed by the first data type and is any one of P values, where P is an integer of two or more,
the restoration information represents P restoration values corresponding to P identification values,
a p-th restoration value among the P restoration values corresponds to a p-th identification value among the P identification values, where p is an integer of one or more and P or less,
the p-th identification value is expressed by the second data type and identifies a p-th value among the P values,
the p-th restoration value is expressed by the first data type and is the p-th value, and
the coefficient information includes, instead of the first coefficient among the plurality of coefficients, the first identification value for identifying a value among the P identification values, the value being identical with the first coefficient.

(Technical Idea 4)

The information processing system according to Technical Idea 3, wherein
in the encoding, the information processing device searches the plurality of coefficients and detects the P values.

(Technical Idea 5)

The information processing system according to Technical Idea 3 or 4, wherein
the restoration information is a table representing the p-th restoration value in association with the p-th identification value.

(Technical Idea 6)

The information processing system according to Technical Idea 1 or 2, wherein

each of the plurality of coefficients is expressed by the first data type and included in any value region among P value regions obtained by dividing a range of possible values of the plurality of coefficients into P, where P is an integer of two or more,
the restoration information represents P restoration values corresponding to P identification values,
a p-th restoration value among the P restoration values corresponds to a p-th identification value among the P identification values, where p is an integer of one or more and P or less,
the p-th identification value is expressed by the second data type and identifies a p-th value region among the P value regions,
the p-th restoration value is a value expressed by the first data type and included in the p-th value region, and
the coefficient information includes, instead of the first coefficient among the plurality of coefficients, the first identification value for identifying a value region including the first coefficient among the P value regions.

(Technical Idea 7)

The information processing system according to Technical Idea 6, wherein
the range of the possible values of the plurality of coefficients is a range from a minimum value of the plurality of coefficients to a maximum value of the plurality of coefficients.

(Technical Idea 8)

The information processing system according to Technical Idea 6 or 7, wherein
the restoration information is a function that outputs the p-th restoration value by inputting the p-th identification value.

(Technical Idea 9)

The information processing system according to Technical Idea 1 or 2, wherein

each of the plurality of coefficients is expressed by the first data type and is included in any one of P classes obtained by clustering and dividing the plurality of coefficients,
the restoration information represents P restoration values corresponding to P identification values,
a p-th restoration value among the P restoration values corresponds to a p-th identification value among the P identification values, where p is an integer of one or more and P or less,
the p-th identification value is expressed by the second data type and identifies a p-th class among the P classes,
the p-th restoration value is expressed by the first data type and is a value of representing the p-th class, and
the coefficient information includes, instead of the first coefficient among the plurality of coefficients, the first identification value for identifying a class including the first coefficient among the P classes.

(Technical Idea 10)

The information processing system according to Technical Idea 9, wherein
the p-th restoration value is a minimum value, a median value, an average value, or a maximum value of a coefficient group included in the p-th class.

(Technical Idea 11)

The information processing system according to Technical Idea 1 or 2, wherein

each of the plurality of coefficients is expressed by the first data type and is included in any one of S classes obtained by clustering and dividing the plurality of coefficients, where S is an integer of two or more,
each of coefficient groups included in an s-th class among the S classes is included in any value region among T value regions obtained by dividing a range of possible values of the coefficient group into T, where s is an integer of one or more and S or less and T is an integer of two or more,
the restoration information represents T restoration values corresponding to T sub-identification values for each of the S classes,
for each of the S classes, a t-th restoration value among the T restoration values corresponds to a t-th sub-identification value of the T sub-identification values, where t is an integer of one or more and T or less,
the t-th sub-identification value in the s-th class identifies a t-th value region among the T value regions in the s-th class,
the t-th restoration value in the s-th class is a value included in the t-th value region in the s-th class, and
the coefficient information includes, instead of the first coefficient among the plurality of coefficients, the first identification value for identifying a set of a class including the first coefficient among the S classes and a value region including the first coefficient among the T value regions.

(Technical Idea 12)

The information processing system according to Technical Idea 11, wherein
the restoration information is a function that outputs the t-th restoration value by inputting the t-th sub-identification value for each of the S classes.

(Technical Idea 13)

The information processing system according to Technical Idea 1 or 2, wherein

each of the plurality of coefficients is expressed by the first data type and belongs to any one of P groups, where P is an integer of two or more,

the restoration information represents P restoration values corresponding to P identification values,

a p-th restoration value among the P restoration values corresponds to a p-th identification value among the P identification values, where p is an integer of one or more and P or less,

the p-th identification value is expressed by the second data type and identifies a p-th group among the P groups,

the p-th restoration value is expressed by the first data type and is a value of representing a coefficient group belonging to the p-th group, and

the coefficient information includes, instead of the first coefficient among the plurality of coefficients, the first identification value for identifying a group to which the first coefficient belongs among the P groups.

(Technical Idea 14)

The information processing system according to any one of Technical Ideas 1 to 13, wherein each of the N decision variables included in the cost function is a binary discrete variable.

(Technical Idea 15)

The information processing system according to Technical Idea 14, wherein the information processing device formulates the combinatorial optimization problem into the cost function of a quadratic unconstrained binary optimization (QUBO) problem.

(Technical Idea 16)

The information processing system according to Technical Idea 14, wherein the information processing device formulates the combinatorial optimization problem into the cost function in an Ising problem that minimizes an Ising model.

(Technical Idea 17)

The information processing system according to Technical Idea 15, wherein the solver device solves the QUBO problem while reducing it to an Ising problem that minimizes an Ising model.

(Technical Idea 18)

The information processing system according to Technical Idea 16 or 17, wherein the solver device solves the Ising problem by a simulated bifurcation algorithm.

(Technical Idea 19)

The information processing system according to Technical Idea 14, wherein

the cost function is a cubic or higher function of the N decision variables, and
the combinatorial optimization problem is a higher order binary optimization (HUBO) problem.

(Technical Idea 20)

An information processing device that solves a combinatorial optimization problem using a solver device, wherein

the information processing device outputs coefficient information representing a plurality of coefficients in a cost function including the plurality of coefficients and N decision variables, where N is an integer of two or more,
the solver device calculates ground state information representing values of the N decision variables by executing a solving process for minimizing the cost function, based on the coefficient information, and
the information processing device:

generates the plurality of coefficients based on the combinatorial optimization problem;
encodes a first coefficient represented by a predetermined first data type among the plurality of coefficients into a first identification value represented by a second data type having a data size smaller than a data size of the first data type;

outputs, to the solver device, the coefficient information including the first identification value instead of the first coefficient;

acquires the ground state information from the solver device; and

outputs a solution of the combinatorial optimization problem based on the ground state information, wherein

in the solving process, the solver device executes an operation on the first coefficient by using a first restoration value corresponding to the first identification value represented by restoration information, and

the first restoration value is expressed by the first data type.

(Technical Idea 21)

An information processing method of an information processing device and a solver device solving a combinatorial optimization problem, the method including:

by the information processing device, outputting coefficient information representing a plurality of coefficients in a cost function including the plurality of coefficients and N decision variables, where N is an integer of two or more;

by the solver device, calculating ground state information representing values of the N decision variables by executing a solving process for minimizing the cost function, based on the coefficient information; and

by the information processing device,

generating the plurality of coefficients based on the combinatorial optimization problem,

encoding a first coefficient represented by a predetermined first data type among the plurality of coefficients into a first identification value represented by a second data type having a data size smaller than a data size of the first data type,

outputting, to the solver device, the coefficient information including the first identification value instead of the first coefficient;

acquiring the ground state information from the solver device, and

outputting a solution of the combinatorial optimization problem based on the ground state information, wherein

in the solving process, the solver device executes an operation on the first coefficient by using a first restoration value corresponding to the first identification value represented by restoration information,

the first restoration value is expressed by the first data type.

(Technical Idea 22)

A program for causing a computer to function as an information processing device that solves a combinatorial optimization problem using a solver device, wherein

the information processing device outputs coefficient information representing a plurality of coefficients in a cost function including the plurality of coefficients and N decision variables, where N is an integer of two or more,

the solver device calculates ground state information representing a value of each of the N decision variables by executing a solving process for minimizing the cost function based on the coefficient information,

the program causes the computer to operate to:

generate the plurality of coefficients based on the combinatorial optimization problem;

encode a first coefficient represented by a predetermined first data type among the plurality of coefficients into a first identification value represented by a second data type having a data size smaller than a data size of the first data type;

output, to the solver device, the coefficient information including the first identification value instead of the first coefficient;

acquire the ground state information from the solver device; and

output a solution of the combinatorial optimization problem based on the ground state information,

in the solving process, the solver device executes an operation on the first coefficient by using a first restoration value corresponding to the first identification value represented by restoration information, and

the first restoration value is expressed by the first data type.

(Technical Idea 23)

Circuit information described in a hardware description language and representing a configuration of a circuit, wherein

the circuit information causes the circuit to function as an information processing device that solves a combinatorial optimization problem using a solver device,
the information processing device outputs coefficient information representing a plurality of coefficients in a cost function including the plurality of coefficients and N decision variables, where N is an integer of two or more,
the solver device calculates ground state information representing values of the N decision variables by executing a solving process for minimizing the cost function, based on the coefficient information,
the information processing device:

generates the plurality of coefficients based on the combinatorial optimization problem;
encodes a first coefficient represented by a predetermined first data type among the plurality of coefficients into a first identification value represented by a second data type having a data size smaller than a data size of the first data type;
outputs, to the solver device, the coefficient information including the first identification value instead of the first coefficient;
acquires the ground state information from the solver device; and
outputs a solution of the combinatorial optimization problem based on the ground state information,

in the solving process, the solver device executes an operation on the first coefficient by using a first restoration value corresponding to the first identification value represented by restoration information, and
the first restoration value is expressed by the first data type.

(Technical Idea 24)

Circuit information written in a reconfigurable semiconductor device for operating the reconfigurable semiconductor device, wherein

the circuit information causes the reconfigurable semiconductor device to function as an information processing device that solves a combinatorial optimization problem using a solver device,
the information processing device outputs coefficient information representing a plurality of coefficients in a cost function including the plurality of coefficients and N decision variables, where N is an integer of two or more,
the solver device calculates ground state information representing values of the N decision variables by executing a solving process for minimizing the cost function based on the coefficient information,
the information processing device:

generates the plurality of coefficients based on the combinatorial optimization problem;
encodes a first coefficient represented by a predetermined first data type among the plurality of coefficients into a first identification value represented by a second data type having a data size smaller than a data size of the first data type;
outputs, to the solver device, the coefficient information including the first identification value instead of the first coefficient;
acquires the ground state information from the solver device; and
outputs a solution of the combinatorial optimization problem based on the ground state information, and

in the solving process, the solver device executes an operation on the first coefficient by using a first restoration value corresponding to the first identification value represented by restoration information, and
the first restoration value is expressed by the first data type.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

**Claims**

1. An information processing system (10) for solving a combinatorial optimization problem, the information processing system (10) comprising:

an information processing device (20) that outputs coefficient information representing a plurality of coefficients in a cost function including the plurality of coefficients and N decision variables, where N is an integer of two or more; and
a solver device (30) that calculates ground state information representing values of the N decision variables by executing a solving process for minimizing the cost function, based on the coefficient information, wherein the information processing device (20):

generates the plurality of coefficients based on the combinatorial optimization problem;
encodes a first coefficient represented by a predetermined first data type among the plurality of coefficients into a first identification value represented by a second data type having a data size smaller than a data size of the first data type;
outputs, to the solver device (30), the coefficient information including the first identification value instead of the first coefficient;
acquires the ground state information from the solver device (30); and
outputs a solution of the combinatorial optimization problem based on the ground state information,

in the solving process, the solver device (30) executes an operation on the first coefficient by using a first restoration value corresponding to the first identification value represented by restoration information, and the first restoration value is expressed by the first data type.

2. The information processing system (10) according to claim 1, wherein

in encoding, the information processing device (20) generates the restoration information based on the plurality of coefficients, and
in outputting the coefficient information, the information processing device (20) outputs the restoration information to the solver device (30).

3. The information processing system (10) according to claim 1 or 2, wherein

each of the plurality of coefficients is expressed by the first data type and is any one of P values, where P is an integer of two or more,
the restoration information represents P restoration values corresponding to P identification values,
a p-th restoration value among the P restoration values corresponds to a p-th identification value among the P identification values, where p is an integer of one or more and P or less,
the p-th identification value is expressed by the second data type and identifies a p-th value among the P values,
the p-th restoration value is expressed by the first data type and is the p-th value, and
the coefficient information includes, instead of the first coefficient among the plurality of coefficients, the first identification value for identifying a value among the P identification values, the value being identical with the first coefficient.

4. The information processing system (10) according to claim 3, wherein
in the encoding, the information processing device (20) searches the plurality of coefficients and detects the P values.

5. The information processing system (10) according to claim 3 or 4, wherein
the restoration information is a table representing the p-th restoration value in association with the p-th identification value.

6. The information processing system (10) according to claim 1 or 2, wherein

each of the plurality of coefficients is expressed by the first data type and included in any value region among P value regions obtained by dividing a range of possible values of the plurality of coefficients into P, where P is an integer of two or more,
the restoration information represents P restoration values corresponding to P identification values,

a p-th restoration value among the P restoration values corresponds to a p-th identification value among the P identification values, where p is an integer of one or more and P or less,

the p-th identification value is expressed by the second data type and identifies a p-th value region among the P value regions,

the p-th restoration value is a value expressed by the first data type and included in the p-th value region, and the coefficient information includes, instead of the first coefficient among the plurality of coefficients, the first identification value for identifying a value region including the first coefficient among the P value regions.

7. The information processing system (10) according to claim 6, wherein
the range of the possible values of the plurality of coefficients is a range from a minimum value of the plurality of coefficients to a maximum value of the plurality of coefficients.

8. The information processing system (10) according to claim 6 or 7, wherein
the restoration information is a function that outputs the p-th restoration value by inputting the p-th identification value.

9. The information processing system (10) according to claim 1 or 2, wherein

each of the plurality of coefficients is expressed by the first data type and is included in any one of P classes obtained by clustering and dividing the plurality of coefficients,

the restoration information represents P restoration values corresponding to P identification values,

a p-th restoration value among the P restoration values corresponds to a p-th identification value among the P identification values, where p is an integer of one or more and P or less,

the p-th identification value is expressed by the second data type and identifies a p-th class among the P classes,

the p-th restoration value is expressed by the first data type and is a value of representing the p-th class, and the coefficient information includes, instead of the first coefficient among the plurality of coefficients, the first identification value for identifying a class including the first coefficient among the P classes.

10. The information processing system (10) according to claim 1 or 2, wherein

each of the plurality of coefficients is expressed by the first data type and is included in any one of S classes obtained by clustering and dividing the plurality of coefficients, where S is an integer of two or more,

each of coefficient groups included in an s-th class among the S classes is included in any value region among T value regions obtained by dividing a range of possible values of the coefficient group into T, where s is an integer of one or more and S or less and T is an integer of two or more,

the restoration information represents T restoration values corresponding to T sub-identification values for each of the S classes,

for each of the S classes, a t-th restoration value among the T restoration values corresponds to a t-th sub-identification value of the T sub-identification values, where t is an integer of one or more and T or less,

the t-th sub-identification value in the s-th class identifies a t-th value region among the T value regions in the s-th class,

the t-th restoration value in the s-th class is a value included in the t-th value region in the s-th class, and the coefficient information includes, instead of the first coefficient among the plurality of coefficients, the first identification value for identifying a set of a class including the first coefficient among the S classes and a value region including the first coefficient among the T value regions.

11. The information processing system (10) according to claim 10, wherein
the restoration information is a function that outputs the t-th restoration value by inputting the t-th sub-identification value for each of the S classes.

12. The information processing system (10) according to claim 1 or 2, wherein

each of the plurality of coefficients is expressed by the first data type and belongs to any one of P groups, where P is an integer of two or more,

the restoration information represents P restoration values corresponding to P identification values,

a p-th restoration value among the P restoration values corresponds to a p-th identification value among the P identification values, where p is an integer of one or more and P or less,

the p-th identification value is expressed by the second data type and identifies a p-th group among the P groups,

the p-th restoration value is expressed by the first data type and is a value of representing a coefficient group belonging to the p-th group, and
the coefficient information includes, instead of the first coefficient among the plurality of coefficients, the first identification value for identifying a group to which the first coefficient belongs among the P groups.

13. An information processing method of an information processing device (20) and a solver device (30) solving a combinatorial optimization problem, the method comprising:

by the information processing device (20), outputting coefficient information representing a plurality of coefficients in a cost function including the plurality of coefficients and N decision variables, where N is an integer of two or more;
by the solver device (30), calculating ground state information representing values of the N decision variables by executing a solving process for minimizing the cost function, based on the coefficient information; and
by the information processing device (20),

generating the plurality of coefficients based on the combinatorial optimization problem,
encoding a first coefficient represented by a predetermined first data type among the plurality of coefficients into a first identification value represented by a second data type having a data size smaller than a data size of the first data type,
outputting, to the solver device (30), the coefficient information including the first identification value instead of the first coefficient;
acquiring the ground state information from the solver device (30), and
outputting a solution of the combinatorial optimization problem based on the ground state information, wherein

in the solving process, the solver device (30) executes an operation on the first coefficient by using a first restoration value corresponding to the first identification value represented by restoration information, the first restoration value is expressed by the first data type.

14. A program causing a computer to function as an information processing device (20) that solves a combinatorial optimization problem using a solver device (30), wherein

the information processing device (20) outputs coefficient information representing a plurality of coefficients in a cost function including the plurality of coefficients and N decision variables, where N is an integer of two or more, the solver device (30) calculates ground state information representing a value of each of the N decision variables by executing a solving process for minimizing the cost function based on the coefficient information, the program causes the computer to operate to:

generate the plurality of coefficients based on the combinatorial optimization problem;
encode a first coefficient represented by a predetermined first data type among the plurality of coefficients into a first identification value represented by a second data type having a data size smaller than a data size of the first data type;
output, to the solver device (30), the coefficient information including the first identification value instead of the first coefficient;
acquire the ground state information from the solver device (30); and
output a solution of the combinatorial optimization problem based on the ground state information,

in the solving process, the solver device (30) executes an operation on the first coefficient by using a first restoration value corresponding to the first identification value represented by restoration information, and the first restoration value is expressed by the first data type.

15. Circuit information described in a hardware description language and representing a configuration of a circuit, wherein

the circuit information causes the circuit to function as an information processing device (20) that solves a combinatorial optimization problem using a solver device (30), the information processing device (20) outputs coefficient information representing a plurality of coefficients in a cost function including the plurality of coefficients and N decision variables, where N is an integer of two or more, the solver device (30) calculates ground state information representing values of the N decision variables by executing a solving process for minimizing the cost function, based on the coefficient information,

the information processing device (20):

generates the plurality of coefficients based on the combinatorial optimization problem;
encodes a first coefficient represented by a predetermined first data type among the plurality of coefficients into a first identification value represented by a second data type having a data size smaller than a data size of the first data type;
outputs, to the solver device (30), the coefficient information including the first identification value instead of the first coefficient;
acquires the ground state information from the solver device (30); and
outputs a solution of the combinatorial optimization problem based on the ground state information,

in the solving process, the solver device (30) executes an operation on the first coefficient by using a first restoration value corresponding to the first identification value represented by restoration information, and the first restoration value is expressed by the first data type.

# FIG.1

N-size problem

# FIG.2

| N DECISION VARIABLES | 2×N INTERNAL VARIABLES |
|---|---|

$s_1$ — $x_1 \bigcirc \quad \bigcirc y_1$

$s_2$ — $x_2 \bigcirc \quad \bigcirc y_2$

$s_3$ — $x_3 \bigcirc \quad \bigcirc y_3$

$s_4$ — $x_4 \bigcirc \quad \bigcirc y_4$

$s_5$ — $x_5 \bigcirc \quad \bigcirc y_5$

$s_6$ — $x_6 \bigcirc \quad \bigcirc y_6$

$\vdots$

$s_i$ — $x_i \bigcirc \quad \bigcirc y_i$

$\vdots$

$s_N$ — $x_N \bigcirc \quad \bigcirc y_N$

# FIG.3

```
        ( START )
            │
            ▼
   ACQUIRE PROBLEM        ∼S11
            │
            ▼
      INITIALIZE          ∼S12
            │
            ▼
┌─► REPEATED PROCESS      ∼S13
│           │
│           ▼
│  EXECUTE y UPDATE PROCESS  ∼S14
│           │
│           ▼
│  EXECUTE x UPDATE PROCESS  ∼S15
│           │
│           ▼
│   EXECUTE WALL PROCESS   ∼S16
│           │
│           ▼
└── REPEATED PROCESS      ∼S17
            │
            ▼
        OUTPUT           ∼S18
            │
            ▼
         ( END )
```

# FIG.4

COMBINATORIAL OPTIMIZATION PROBLEM → HOST DEVICE (20, 10) → J, h → SOLVER DEVICE (ISING MACHINE) (30)

$s_1$ ○
$s_2$ ○
$s_3$ ○
$s_4$ ○
$s_5$ ○
$s_6$ ○

SOLUTION ← HOST DEVICE ← $s^{opt}$ ← SOLVER DEVICE

# FIG.5

COMBINATORIAL
OPTIMIZATION
PROBLEM →

20
HOST
DEVICE

10
$J$, $h$, $y^{init}$ →

30
SOLVER DEVICE
(SIMULATED
BIFURCATION
MACHINE)

$x_1$ ○   ○ $y_1$
$x_2$ ○   ○ $y_2$
$x_3$ ○   ○ $y_3$
$x_4$ ○   ○ $y_4$
$x_5$ ○   ○ $y_5$
$x_6$ ○   ○ $y_6$

← SOLUTION

$s^{opt}$ ($x^{opt}$) ←

# FIG.6

COMBINATORIAL OPTIMIZATION PROBLEM

HOST DEVICE — 20

PROBLEM ACQUISITION UNIT — 42

FORMULATION UNIT — 44

PLURALITY OF COEFFICIENTS

ENCODING UNIT — 46

COEFFICIENT OUTPUT UNIT — 48

COEFFICIENT INFORMATION, RESTORATION INFORMATION

SOLVER DEVICE — 30

ACQUISITION CIRCUIT — 54

COEFFICIENT INFORMATION MEMORY — 56

COEFFICIENT POSITION

IDENTIFICATION VALUE

SOLVING CIRCUIT — 60

RESTORATION INFORMATION MEMORY — 58

IDENTIFICATION VALUE

RESTORATION VALUE

SOLUTION

SOLUTION OUTPUT UNIT — 52

SOLUTION GENERATION UNIT — 50

GROUND STATE INFORMATION

GROUND STATE OUTPUT CIRCUIT — 62

GROUND STATE INFORMATION

EP 4 524 822 A1

35

# FIG.7

POSSIBLE RANGE OF
VALUES EXPRESSED BY
FIRST DATA TYPE

RANGE OF POSSIBLE
VALUES OF COEFFICIENTS
(a, b, c, d)

# FIG.8

PLURALITY OF COEFFICIENTS (FIRST DATA TYPE) {W}$_A$={a, b, a, c, c, d, a, a, a, b, b, d, ···}

ENCODING

COEFFICIENT INFORMATION
(SECOND DATA TYPE)
{cW}$_B$={0, 1, 0, 2, 2, 3, 0, 0, 0, 1, 1, 3···},

RESTORATION INFORMATION

| IDENTI-FICATION VALUE | RESTORATION VALUE (FIRST DATA TYPE) |
|---|---|
| 0 | a (=-2.8) |
| 1 | b (=8.5) |
| 2 | c (=0.7) |
| 3 | d (=12.1) |

# FIG.9

DESIGNATE
COEFFICIENT
POSITION (m)
TO BE OPERATED

CO-
EFFICIENT $\{cW\}_B = \{0, 1, 0, 2, 2, 3, 0, 0, 0, 1, 1, 3 \cdots\}$
INFOR-
MATION

DESIGNATE
IDENTIFICATION
VALUE ($cW_m$)

RESTORATION INFORMATION

| IDENTIFICATION VALUE (SECOND DATA TYPE) | RESTORATION VALUE (FIRST DATA TYPE) |
|---|---|
| 0 | a (=-2.8) |
| 1 | b (=8.5) |
| 2 | c (=0.7) |
| 3 | d (=12.1) |

OUTPUT
RESTORATION
VALUE
(SEE TABLE)

# FIG.10

POSSIBLE RANGE OF
VALUES EXPRESSED BY
FIRST DATA TYPE

POSSIBLE RANGE OF
VALUES OF COEFFICIENTS
(MINIMUM VALUE=$V_{min}$,
MAXIMUM VALUE=$V_{max}$)

# FIG.11

PLURALITY OF COEFFICIENTS (FIRST DATA TYPE)
$\{W\}_A=\{1.3, 2.2, 0.0, 2.5, 2.6, 2.3, 4.0, 1.7, 0.6, \cdots\}$

ENCODING

COEFFICIENT INFORMATION (SECOND DATA TYPE) $\{cW\}_B=\{1, 2, 0, 2, 2, 2, 3, 1, 0, \cdots\}$

RESTORATION INFORMATION (RESTORATION VALUE (FIRST DATA TYPE)=$cW_m \times step+V_{min}$)

# FIG.12

DESIGNATE
COEFFICIENT
POSITION (m)
TO BE OPERATED

COEFFICIENT
INFORMATION $\{cW\}_B=\{0, 1, 0, 2, (2), 3, 0, 0, 0, 1, 1, 3\cdots\}$

DESIGNATE
IDENTIFICATION
VALUE $(cW_m)$

OUTPUT
RESTORATION
VALUE
(FUNCTION
OPERATION)

RESTORATION INFORMATION
(RESTORATION VALUE=
$cW_m \times step+V_{min}$)

# FIG.13

POSSIBLE RANGE OF
VALUES EXPRESSED BY
FIRST DATA TYPE

RANGE OF POSSIBLE VALUES OF
COEFFICIENTS
(DISTRIBUTED IN PLURALITY OF
PARTIAL REGIONS)

# FIG.14

VALUE OF W

SECOND CLASS

FIRST CLASS

$W_1$ $W_2$ $W_3$ $W_4$ $W_5$ $W_6$ $W_7$ $W_8$ $W_9$ ...

ENCODING

SECOND CLASS
IDENTIFICATION VALUE=1
REPRESENTATIVE VALUE=8.5

FIRST CLASS
IDENTIFICATION VALUE=0
REPRESENTATIVE
VALUE=-2.8

0  0  0  1  0  1  1  1  0

$cW_1$ $cW_3$ $cW_5$ $cW_7$ $cW_9$
$cW_2$ $cW_4$ $cW_6$ $cW_8$ ...

COEFFICIENT INFORMATION (SECOND DATA TYPE)
$\{cW\}_B = \{0, 0, 0, 1, 0, 1, 1, 1, 0, \cdots\}$,

RESTORATION INFORMATION

| IDENTI-FICATION VALUE | RESTORATION VALUE (FIRST DATA TYPE) |
|---|---|
| 0 | a (=-2.8) |
| 1 | b (=8.5) |

# FIG.15

SECOND MAXIMUM VALUE ($V_{max\_2}$)
SECOND MINIMUM VALUE ($V_{min\_2}$)

} CLASS VALUE=1

FIRST MAXIMUM VALUE ($V_{max\_1}$)
FIRST MINIMUM VALUE ($V_{min\_1}$)

} CLASS VALUE=0

0,1  0,2  0,0  1,1  0,1  1,2  1,3  1,0  0,3

$cW_1$  $cW_2$  $cW_3$  $cW_4$  $cW_5$  $cW_6$  $cW_7$  $cW_8$  $cW_9$  ...

ENCODING

COEFFICIENT INFORMATION (SECOND DATA TYPE)
$\{cW\}_B = \{(0, 1), (0, 2), (0, 0), (1, 1), (0, 1), (2, 2), (2, 3), (1, 0), (0, 3), \cdots\}$
IDENTIFICATION VALUE: $cW_2 =$(CLASS VALUE, SUB-IDENTIFICATION VALUE ($QV_m$))

RESTORATION INFORMATION

| CLASS VALUE | RESTORATION VALUE |
|---|---|
| 0 | RESTORATION VALUE (FIRST DATA TYPE)=$QV_m \times step\_1 + V_{min\_1}$ |
| 1 | RESTORATION VALUE (FIRST DATA TYPE)=$QV_m \times step\_2 + V_{min\_2}$ |

EP 4 524 822 A1

# FIG.16

DESIGNATE COEFFICIENT
POSITION (m) TO BE OPERATED

COEFFICIENT INFORMATION $\{cW\}_B=\{(0, 1), (0, 2), (0, 0), (1, 1), (0, 1), (2, 2), (2, 3), (1, 0), (0, 3), \cdots\}$

DESIGNATION OF
CLASS VALUE

| CLASS VALUE | RESTORATION VALUE |
|---|---|
| 0 | RESTORATION VALUE=$QV_m \times step\_1 + V_{min\_1}$ |
| 1 | RESTORATION VALUE=$QV_m \times step\_2 + V_{min\_2}$ |

FUNCTION OUTPUT (SEE TABLE)

DESIGNATION OF
SUB-
IDENTIFICATION
VALUE ($QV_m$)

FUNCTION OPERATION
(RESTORATION VALUE=
$QV_m \times step\_1 + V_{min\_1}$)

OUTPUT
RESTORATION VALUE
(FUNCTION
OPERATION)

# FIG.17

$m_1$ TO $m_N$

PRODUCT-SUM
OPERATION VALUE

60

$$\sum_{n=1}^{N} x_n W'_n$$

70

N IDENTIFICATION
VALUES ($cW_n$)

56

PRODUCT-
SUM
OPER-
ATION
CIRCUIT

72

SEARCH
CIRCUIT

68

FIRST
VARIABLE
MEMORY

P RESTORATION
VALUES

58

N FIRST VARIABLES ($x_n$)

FIG.18

# FIG.19

200

212

MARKET SERVER
DEVICE

MARKET STATE
PACKET

ORDER PACKET

214 (10)

CLIENT DEVICE
(INFORMATION
PROCESSING
DEVICE)

214

ORDER
PACKET

CLIENT DEVICE

⋮

214

ORDER
PACKET

CLIENT DEVICE

# FIG.20

300

IMAGE
DATA

312

OBJECT
DETEC-
TION
DEVICE

10

INFOR-
MATION
PROC-
ESSING
SYSTEM

314

CONTROL
DEVICE

# FIG.21

Europäisches
Patentamt

European
Patent Office

Office européen
des brevets

# EUROPEAN SEARCH REPORT

Application Number

EP 24 18 6666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/064976 A1 (NEC CORP [JP]) 31 March 2022 (2022-03-31) * paragraph [0006] - paragraph [0096]; figures 1,2,6-8 * | 1-15 | INV. G06N5/01 |
| A | KORNILIOS KOURTIS ET AL: "Optimizing sparse matrix-vector multiplication using index and value compression", COMPUTING FRONTIERS, ACM, 2 PENN PLAZA, SUITE 701 NEW YORK NY 10121-0701 USA, 5 May 2008 (2008-05-05), pages 87-96, XP058176171, DOI: 10.1145/1366230.1366244 ISBN: 978-1-60558-077-7 * Section 3; figure 4 * | 1-15 | |
| A | Song Han ET AL: "Deep Compression: Compressing Deep Neural Networks with Pruning, Trained Quantization and Huffman Coding", , 15 February 2016 (2016-02-15), XP055393078, Retrieved from the Internet: URL:https://arxiv.org/pdf/1510.00149v5.pdf [retrieved on 2017-07-21] * Section 3; figure 3 * | 1-15 | TECHNICAL FIELDS SEARCHED (IPC) G06N |
| A | US 2022/051120 A1 (HIDAKA RYO [JP] ET AL) 17 February 2022 (2022-02-17) * paragraph [0002] - paragraph [0006]; paragraph [0027] - paragraph [0187]; figures 1-4, 6 * | 1-15 | |

-/--

The present search report has been drawn up for all claims

| Place of search | Date of completion of the search | Examiner |
|---|---|---|
| The Hague | 13 December 2024 | Klasen, TJ |

EPO FORM 1503 03.82 (P04C01)

page 1 of 2

| | Europäisches<br>Patentamt<br>European<br>Patent Office<br>Office européen<br>des brevets | **EUROPEAN SEARCH REPORT** |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | WO 2022/038743 A1 (NEC CORP [JP])<br>24 February 2022 (2022-02-24)<br>* paragraph [0005] - paragraph [0145];<br>figures 1-6 *<br>- - - - - | 1-15 | |
| | | | **TECHNICAL FIELDS<br>SEARCHED (IPC)** |

The present search report has been drawn up for all claims

| Place of search | Date of completion of the search | Examiner |
|---|---|---|
| The Hague | 13 December 2024 | Klasen, TJ |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 6666

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | Publication date | Patent family member(s) | | Publication date |
|---|---|---|---|---|
| WO 2022064976 A1 | 31-03-2022 | JP | 7464136 B2 | 09-04-2024 |
| | | JP | WO2022064976 A1 | 31-03-2022 |
| | | US | 2023359921 A1 | 09-11-2023 |
| | | WO | 2022064976 A1 | 31-03-2022 |
| US 2022051120 A1 | 17-02-2022 | CN | 114077805 A | 22-02-2022 |
| | | EP | 3955175 A1 | 16-02-2022 |
| | | JP | 7326235 B2 | 15-08-2023 |
| | | JP | 2022032703 A | 25-02-2022 |
| | | JP | 2023139286 A | 03-10-2023 |
| | | JP | 2023139287 A | 03-10-2023 |
| | | US | 2022051120 A1 | 17-02-2022 |
| | | US | 2024037430 A1 | 01-02-2024 |
| WO 2022038743 A1 | 24-02-2022 | JP | 7405264 B2 | 26-12-2023 |
| | | JP | WO2022038743 A1 | 24-02-2022 |
| | | US | 2023306074 A1 | 28-09-2023 |
| | | WO | 2022038743 A1 | 24-02-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021060864 A
- JP 2019145010 A
- JP 2019159566 A
- JP 2021043667 A
- JP 2021043589 A

**Non-patent literature cited in the description**

- **HAYATO GOTO** ; **KOSUKE TATSUMURA** ; **ALEXANDER R. DIXON**. Combinatorial optimization by simulating adiabatic bifurcations in nonlinear Hamiltonian systems. *Science Advances*, 2019, vol. 5, eaav2372

- **HAYATO GOTO** ; **KOTARO ENDO** ; **MASARU SUZUKI** ; **YOSHISATO SAKAI** ; **TARO KANAO** ; **YOHEI HAMAKAWA** ; **RYO HIDAKA** ; **MASAYA YAMASAKI** ; **KOSUKE TATSUMURA**. High-performance combinatorial optimization based on classical mechanics. *Science Advances*, 2021, vol. 7, eabe7953